# EUROPEAN PATENT APPLICATION

(11) **EP 4 765 527 A1**
(43) Date of publication of application: **24.06.2026**
(21) Application number: 24854146.8
(22) Date of filing: 06.08.2024
(51) Int. Cl.: H02G 1/06, H02G 1/10, H02G 1/14, H02G 9/02

(54) **CABLE CONNECTION METHOD, MOBILE BODY, AND CONNECTION BODY**

(30) Priority: 14.08.2023 JP 2023131807; 23.07.2024 JP 2024117516
(71) Applicant: FURUKAWA ELECTRIC CO., LTD., Chiyoda-ku, Tokyo 100-8322 (JP)
(72) Inventor: SHIGEMORI, Naoto, Tokyo 100-8322 (JP); MORI, Hiroki, Tokyo 100-8322 (JP); YONEYA, Kazuhiro, Tokyo 100-8322 (JP); ORITO, Hisashi, Tokyo 100-8322 (JP)
(74) Representative: SSM Sandmair
(86) International application number: PCT/JP2024/028090
(87) International publication number: WO 2025/037556

(57) **Abstract**

A cable connection method includes: removing, from an offshore wind power facility, the electrical conductors of a first cable and a second cable that are serially connected to the offshore wind power facility and that transmit electric power; makes the conductor end portions, which are removed, waterproof and houses the conductor end portion of the first cable in a mobile object as well as houses the conductor end portion of the second cable in a mobile object; suspends the mobile objects from the offshore wind power facility using wire ropes, and holds the mobile objects in the sea; and lifts the mobile objects, which are held in the sea, onto a workboat. The mobile objects that are lifted onto the workboat are dismantled, and the conductor end portion of the first cable housed in a mobile object is connected to the conductor end portion of the second cable housed in a mobile object. A connecting object is assembled that includes a closed protective object which houses the conductor end portions connected to each other, and the connecting object is lowered to the bottom of the sea.

## Description

### Field

The present invention relates to a cable connection method, a mobile object, and a connecting object.

### Background

As an invention related to offshore wind farms, for example, a connection system disclosed in Patent Literature 1 is known. Such a connection system is used in a wind farm of the serial connection type, and includes I-tubes that are meant for removal and connection of array cables that establish a floating-type connection among the wind power facilities constituting a wind farm. In an I-tube, two array cables meant for connecting neighboring wind power facilities are connected to each other in the top portion of the I-tube. When attached to a wind power facility, an I-tube gets connected to a cable that is connected to the switch gear of the wind power facility. Moreover, at the time of performing maintenance of the wind power facility, the I-tube is removed from the wind power facility and floats on the sea, thereby resulting in a disconnection of the electrical connection between the cable, which is connected to the switch gear of the wind power facility, and the array cables. Inside the I-tube that is floating on the sea, since two array cables are connected in a junction box, even when the wind power facility is separated from the array cables for the purpose of maintenance, the electrical power can still be supplied from the offshore platform via the I-tube.

### Citation List

### Patent Literature

[Patent Literature 1] Japanese Patent No. 6715850

### Summary

### Technical Problem

In the system disclosed in Patent Literature 1, an I-tube is connected to a wind power facility that is partially exposed on the sea. For that reason, the I-tube gets affected by the wind, swells, waves, the wind-driven rain, and the oceanic current; and gets exerted with load. Moreover, when removed from the wind power facility, the I-tube floats on the sea. However, since it is not moored by a mooring wire, the I-tube moves around due to the effect of the wind, swells, waves, and the wind-driven train; and the array cables face the risk of getting damaged. Moreover, if the I-tube floats on the sea, creatures in the sea may get attached to the I-tube or marine species may come into contact with the I-tube.

The present invention is made in view of the issues mentioned above, and it is an objective of the present invention by which, even in a wind power facility that is removed from serially-connected cables; it becomes possible to hold down the exertion of the load on the cables, to maintain the serial connection among the cables, and to carry on the electric power transmission.

### Solution to Problem

To solve the above-described problem and achieve the object, a cable connection method according to the present invention includes: a step of removing, from an offshore wind power facility, electrical conductors of a first cable and a second cable that are serially connected to the offshore wind power facility and that transmit electric power; a step of assembling including providing a first protective member including a waterproof member configured to make a conductor end portion of the removed first cable waterproof, the first protective member being configured to protect the conductor end portion of the removed first cable, assembling a mobile object by fixing the first protective member to a retention unit configured to retain the first cable in the offshore wind power facility, and providing a second protective member including a waterproof member configured to make a conductor end portion of the removed second cable waterproof, the second protective member being configured to protect the conductor end portion of the removed second cable, and assembling a mobile object by fixing the second protective member to a retention unit configured to retain the second cable in the offshore wind power facility; a step of suspending the mobile objects from the offshore wind power facility using wire ropes and holding the mobile objects in the sea; a step of lifting the mobile objects held in the sea onto a workboat; a step of dismantling the mobile objects lifted onto the workboat; a step of connecting the conductor end portion of the first cable and the conductor end portion of the second cable that have been housed in the mobile objects; a step of assembling a connecting object including a closed protective object configured to house the connected conductor end portions; a step of fixing, using coupling tools, the protective object and the retention unit of the first cable and fixing, using the coupling tools, the protective object and the retention unit of the second cable; and a step of lowering the

### connecting object to bottom of sea.

In the cable connection method according to one aspect of the present invention, each of the first cable and the second cable may include an optical cable, in the mobile objects, end portions of the optical cables may be made waterproof and may be housed in the first protective member and the second protective member, and in the connecting object, the optical cable of the first cable and the optical cable of the second cable may be connected and may be housed in the protective object.

In the cable connection method according to one aspect of the present invention, each of the first cable and the second cable may have a plurality of core wires.

In the cable connection method according to one aspect of the present invention, in the step of making the conductor end portions waterproof, the conductor end portion corresponding to each of the core wires may be made waterproof.

In the cable connection method according to one aspect of the present invention, the offshore wind power facility may include a riser tube having a hollow portion through which the first cable is passed from the sea, and a riser tube having a hollow portion through which the second cable is passed from the sea, and the mobile objects are able to pass through the riser tubes.

In the cable connection method according to one aspect of the present invention, in the step of lifting the mobile objects onto the workboat, the mobile objects suspended using the wire ropes of the offshore wind power facilities and held in sea may be newly joined to the wire ropes of the workboat and are lifted onto the workboat using the wire ropes of the workboat.

In the cable connection method according to one aspect of the present invention, in sea, sea water may flow into the first protective member and into the second protective member.

In the cable connection method according to one aspect of the present invention, distance between the protective member and the retention unit of the first cable and distance between the protective member and the retention unit of the second cable may be adjusted using the coupling tools.

In the cable connection method according to one aspect of the present invention, the coupling tools may be stud bolts, and distance between the protective member and the retention unit of the first cable and distance between the protective member and the retention unit of the second cable may be independently adjusted using the stud bolts.

In the cable connection method according to one aspect of the present invention, the conductor end portions housed in the protective object may be fixed inside the protective object, and components used for fixing the conductor end portions may be nonmagnetic members.

In the cable connection method according to one aspect of the present invention, the conductor end portions of the first cable and the second cable may be housed inside the protective object through holes formed on the protective object, and waterproof treatment may be performed on the holes through which the first cable and the second cable are passed.

A mobile object according to one aspect of the present invention includes: a waterproof member configured to make a conductor end portion of a cable waterproof, the cable being serially connected to an offshore wind power facility and configured to transmit electric power; a protective member configured to protect the conductor end portion and fixed to a retention unit configured to retain the conductor end portion in the offshore wind power facility; and a suspension tool to which a rope for suspending the protective member is knotted.

In the mobile object according to one aspect of the present invention, the protective member may be configured to allow sea water flow therein when in sea.

A connecting object according to one aspect of the present invention includes: a connecting unit configured to connect conductor end portions of a first cable and a second cable which are serially connected to an offshore wind power facility and which transmit electric power; a sealed protective object configured to house the connecting unit; and a coupling tool configured to fix the protective object and a retention unit configured to retain the first cable in the offshore wind power facility, and fix the protective object and a retention unit configured to retain the second cable in the offshore wind power facility.

In the connecting object according to one aspect of the present invention, the coupling tool may be configured to adjust distance between the protective member and the retention unit of the first cable, and adjust distance between the protective member and the retention unit of the second cable.

In the connecting object according to one aspect of the present invention, the two retention units may be integrated as a single unit that is fixed to the protective object.

In the connecting object according to one aspect of the present invention, the two retention units may be separately and independently fixed to the protective object.

In the connecting object according to one aspect of the present invention, the protective object may include a position adjustment/fixing unit configured to, inside the closed protective object, adjust positions of the first cable and the second cable and performs fixing. Advantageous Effects of Invention

According to the present invention, even in a wind power facility that is removed from serially-connected cables; it becomes possible to hold down the exertion of the load on the cables, to maintain the serial connection among the cables, and to carry on the electric power transmission.

### Brief Description of Drawings

FIG. 1 is a schematic diagram illustrating a wind farm of the serial connection type.
FIG. 2 is an external appearance diagram of an offshore platform.
FIG. 3A is a cross-sectional view of an array cable.
FIG. 3B is a cross-sectional view of an array cable.
FIG. 4 is a schematic diagram illustrating the vicinity of a tower of the offshore platform.
FIG. 5 is a schematic diagram in which a floating object is viewed from a side.
FIG. 6 is a schematic diagram illustrating the inside of a junction box.
FIG. 7A is a diagram illustrating the state in which a power cable junction box is opened.
FIG. 7B is a diagram in which device direct-connection terminals, which are housed in the power cable junction box, are viewed from a side.
FIG. 8 is a diagram illustrating a structure of the device direct-connection terminals.
FIG. 9A is a half sectional view of a retention unit.
FIG. 9B is a half sectional view of a different example of the retention unit.
FIG. 9C is a half sectional view of the retention unit in the case in which the array cable illustrated in FIG. 3B is used.
FIG. 9D is a half sectional view of a still different example of the retention unit in the case in which the array cable illustrated in FIG. 3B is used.
FIG. 10 is a flowchart for explaining the flow of a step of lifting the array cables onto a workboat.
FIG. 11 is a schematic diagram illustrating the inside of the junction box before the removal of the array cables.
FIG. 12 is a schematic diagram illustrating the state in which power lines and an optical cable have been removed.
FIG. 13 is a schematic diagram illustrating the state in which waterproof treatment is performed on the end portions of the power lines and the end portion of the optical cable.
FIG. 14 is a schematic diagram illustrating the half sectional surface of a waterproofed portion.
FIG. 15 is a schematic diagram illustrating the state in which the retention unit is lifted.
FIG. 16 is a schematic diagram illustrating the state in which a movement terminator is assembled.
FIG. 17A is a half sectional view of the movement terminator.
FIG. 17B is a half sectional view of a different example of the movement terminator.
FIG. 17C is a half sectional view of a still different example of the movement terminator.
FIG. 18 is a schematic diagram illustrating the suspended state of the movement terminator.
FIG. 19 is a schematic diagram illustrating the task of removing bed stiffeners from the offshore platform.
FIG. 20 is a schematic diagram illustrating the movement terminator being lowered.
FIG. 21 is a schematic diagram illustrating the movement terminator that has moved into the sea.
FIG. 22 is a schematic diagram illustrating the state in which a wire rope of a workboat is joined to the movement terminator.
FIG. 23 is a schematic diagram illustrating the state in which the movement terminator is pulled toward the workboat.
FIG. 24 is a schematic diagram illustrating the task of lifting the movement terminator onto the workboat.
FIG. 25 is a schematic diagram illustrating the movement terminator that has been lifted onto the workboat.
FIG. 26 is a flowchart for explaining the flow of a process for serially connecting the array cables.
FIG. 27 is a schematic diagram illustrating the movement terminators that have been lifted onto the workboat.
FIG. 28 is a schematic diagram illustrating the state in which a protective tube is removed from the retention unit.
FIG. 29 is a schematic diagram illustrating the state in which the waterproofed portions are dismantled and waterproof pipes are removed.
FIG. 30 is a diagram illustrating a configuration of an energization terminator.
FIG. 31A is a planar view of a bottom plate.
FIG. 31B is a planar view of a different example of the bottom plate.
FIG. 32 is a schematic diagram illustrating a step of assembling the energization terminator.
FIG. 33 is a schematic diagram illustrating the state in which the power lines are connected and the optical cable is connected.
FIG. 34 is a schematic diagram illustrating the device direct-connection terminals, the power lines, and the optical cable that have been fixed.
FIG. 35 is a schematic diagram illustrating a waterproofed portion.
FIG. 36 is a schematic diagram illustrating the state in which the bottom plate and the retention unit are coupled using a stud bolt.
FIG. 37 is a schematic diagram illustrating the state in which a protective object is attached to the bottom plate.
FIG. 38 is a schematic diagram illustrating the state in which a lid is attached to the protective object.
FIG. 39 is a flowchart for explaining the flow of a step of lowering the energization terminator to the bottom of the sea.
FIG. 40 is a schematic diagram illustrating the step of lowering the energization terminator to the bottom of the sea.
FIG. 41 is a schematic diagram illustrating the step of lowering the energization terminator to the bottom of the sea.
FIG. 42 is a schematic diagram illustrating the step of lowering the energization terminator to the bottom of the sea.
FIG. 43 is a flowchart for explaining the flow of a step of connecting the array cables to the offshore platform for which the maintenance is completed.
FIG. 44 is a diagram illustrating a modification example of the clamping member of the movement terminator.
FIG. 45A is a diagram illustrating a modification example of attaching the stud bolt.
FIG. 45B is a diagram illustrating a modification example of attaching the stud bolt.
FIG. 46A is a diagram illustrating an example in which a coupling tool includes L angles.
FIG. 46B is a diagram illustrating the example in which a coupling tool includes L angles.

### Description of Embodiments

An embodiment of the present invention is described below in detail with reference to the accompanying drawings. However, the present invention is not limited by the embodiment described below. Moreover, in the drawings, identical or corresponding elements are referred to by the same reference numerals. Moreover, each drawing is schematic in nature, and it needs to be kept in mind that the relationships among the dimensions of the elements or the ratio of the elements may be different than the actual situation. Among the drawings too, there may be portions having different relationships among the dimensions or having different ratios.

### [Embodiment]

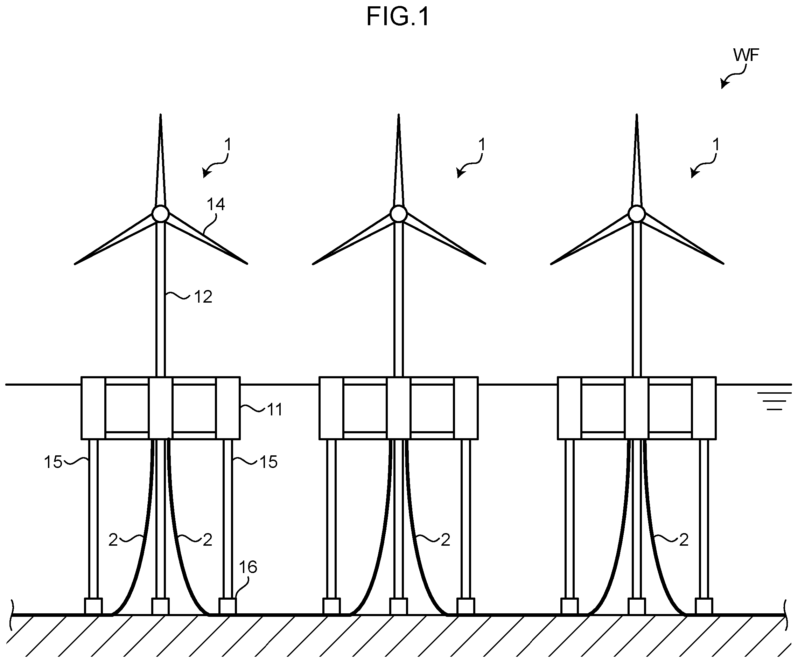

FIG. 1 is a schematic diagram illustrating a wind farm WF of the serial connection type that generates wind power on the sea. In the wind farm WF according to an embodiment, a plurality of offshore platforms 1, each of which includes an electrical generator, is serially connected using array cables 2. The electric power generated in the offshore platforms 1, which represent offshore wind power facilities, is transmitted to an electric power substation via the array cables 2 that transmit the electric power.

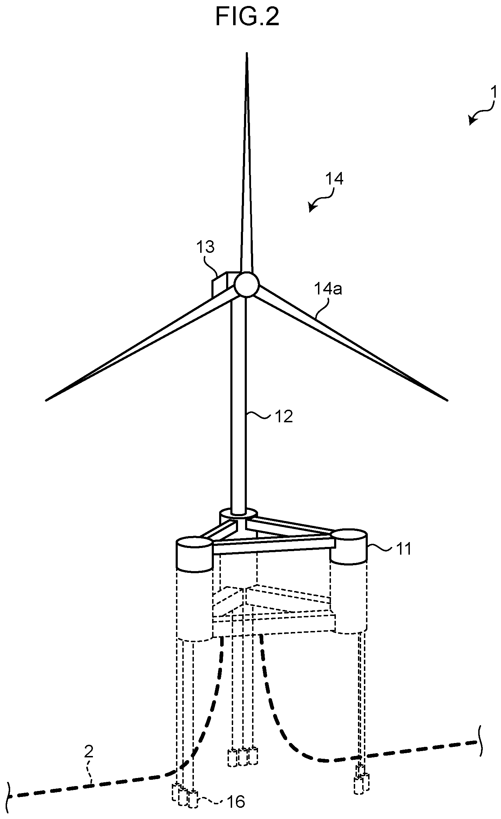

FIG. 2 is an external appearance diagram of the offshore platform 1. The offshore platform 1 is a taut-mooring-type platform called a TLP (Tension Leg Platform). The offshore platform 1 includes a floating object 11, a tower 12, a nacelle 13, a rotor 14, blades 14a, tendons 15, and pedestals 16. In the offshore platform 1, the floating object 11 that is forcibly made to be semisubmersible is connected to the pedestals 16, which are installed at the bottom of the sea, using the tendons 15. With that, the offshore platform 1 is moored using the tensioning force generated due to the buoyant force. In the tower 12 that is disposed on the floating object 11, the nacelle 13 is disposed in the upper part. In the joint part of the nacelle 13 and the tower 12, a yaw driving device is disposed that, according to the direction of the wind, rotates the nacelle 13 around the central axis of the tower 12. The nacelle 13 supports the main shaft (not illustrated) to which the rotor 14 having the blades 14a is attached. Inside the nacelle 13, an electrical generator (not illustrated) is housed, and the main shaft of the rotor 14 is coupled to the rotary shaft of the electrical generator via a step-up gear. Moreover, inside the nacelle 13, an electrical power facility is installed for supplying the electrical power, which is obtained from the electrical generator, to the array cables 2; and a computer device is installed for communicating with a wind vane anemometer and an onshore monitoring device that monitors the offshore platforms 1.

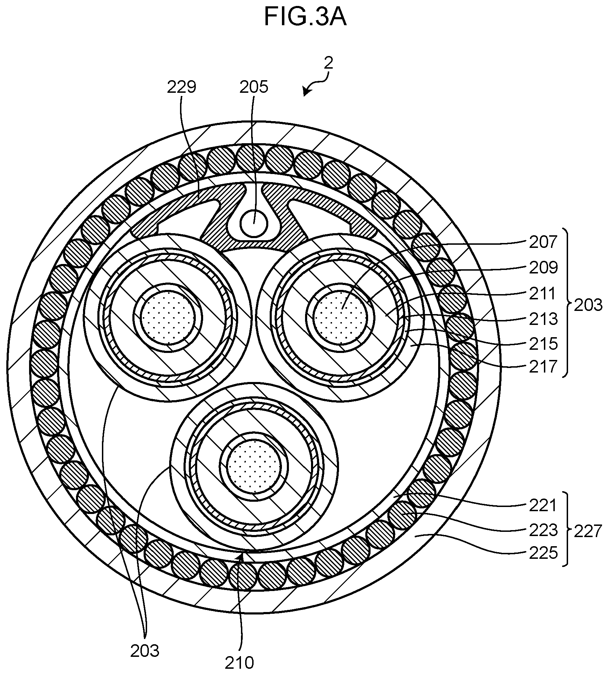

FIG. 3A is a cross-sectional view in the direction normal to the longitudinal direction of the array cable 2. The array cable 2 is mainly configured with a power line unit 210 and a covering body 227 that covers the power line unit 210 from around. The power line unit 210 is a three-core power cable formed by stranding three power lines 203. Alternatively, the power line unit 210 can be configured with a plurality of power lines 203 (core wires) such as two power lines 203 or four power lines 203, or can be configured as single-core wire made of a single power line 203. From the center thereof, each power line 203 is sequentially configured with an electrical conductor 207; an internal semiconductive layer 209 that is disposed on the outer periphery of the electrical conductor 207; an insulation layer 211 that is formed on the outer periphery of the internal semiconductive layer 209; an external semiconductive layer 213 that is disposed on the outer periphery of the insulation layer 211; a metallic sheath 215 that is disposed on the outer periphery of the external semiconductive layer 213; and an internal sheath 217 that is disposed on the outer periphery of the metallic sheath 215.

The covering body 227 includes an adhesive tape 221; an iron wire sheath 223 made of an iron wire; and an external sheath 225. However, the configuration of the power lines 203 and the covering body 227 is not limited to the configuration illustrated in the drawings. Thus, some of the illustrated members can be omitted, or some other members can be added. For example, regarding the power lines 203, as long as at least the electrical conductor 207 is covered by an insulating object (including the internal semiconductive layer 209, the insulation layer 211, and the external semiconductive layer 213), it serves the purpose.

In the gap formed in between the power line unit 210 and the covering body 227, a spacer member 229 is disposed. The spacer member 229 is a member manufactured by, for example, extrusion molding of resin. The spacer member 229 can be placed at a single place as illustrated in FIG. 3A. However, the placement is not limited to the example illustrated in FIG. 3A. Alternatively, three spacers 209 can be placed at three places between three pairs of the power lines 203. Meanwhile, in the gap formed in between the power line unit 210 and the covering body 227, the portion in which the spacer member 229 is not placed can be left as an empty space without placing any other member. For example, the gap can be filled by placing an interposition made of a polypropylene string. In the gap included in the spacer member 229, an optical cable 205 is disposed that includes an optical fiber. The optical cable 205 is made waterproof using, for example, a metallic pipe made of stainless-steel. The optical cable 205 and the metallic pipe can be housed in the gap between the spacer member 229 and the power line unit 210; or the gap between the adhesive tape 221 and the power line unit 210 can be filled with an interposition made of resin fiber such as polyethylene, and the optical cable 205 and the metallic piping can be housed inside the interposition.

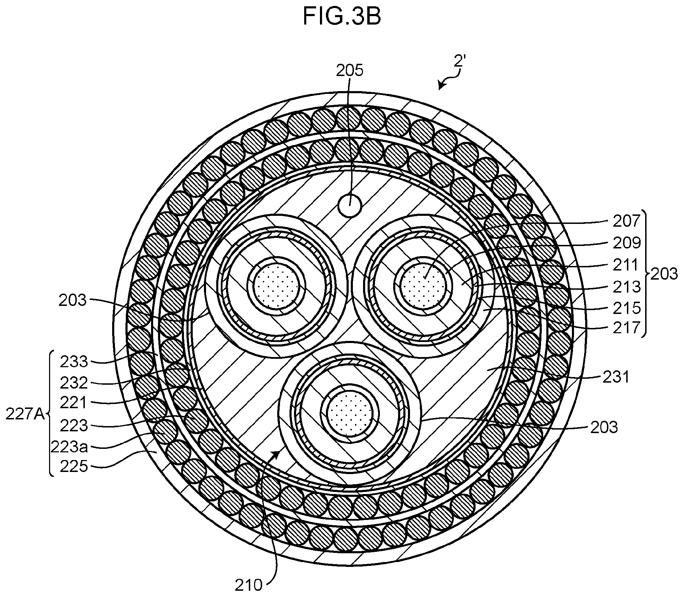

Meanwhile, as the array cables that serially connect the offshore platforms 1, it is also possible to use an array cable 2' illustrated in FIG. 3B. The array cable 2' is configured with the power line unit 210 and a covering body 227A that covers the power line unit 210 from around. FIG. 3B is a cross-sectional view in the direction normal to the longitudinal direction of the array cable 2'. The array cable 2' does not include the spacer member 229, but includes an iron wire sheath 223a, an interposition 231, a bedding 232, and a bedding 233. The covering body 227A differs from the array cable 2 in the way of including the adhesive tape 221, the bedding 232, the iron wire sheath 223, the bedding 233, the iron wire sheath 223a, and the external sheath 225. The interposition 231 is made of, for example, a polypropylene string and is filled in the gap in between the power line unit 210 and the adhesive tape 221. In the array cable 2', the optical cable 205 is placed inside the interposition. The bedding 232 is made of, for example, a plastic string, and covers the outer periphery of the adhesive tape 221. The iron wire sheath 223 is disposed on the outer periphery side of the bedding 232, and the bedding 233 is disposed on the outer periphery side of the iron wire sheath 223. The bedding 233 is made of, for example, a plastic string. On the outer periphery side of the bedding 233, the iron wire sheath 223a, which is made of an iron wire, is disposed. Thus, in the array cable 2', two iron wire sheaths are sandwiching the bedding 233. The outer periphery side of the iron wire sheath 223a is covered by the external sheath 225.

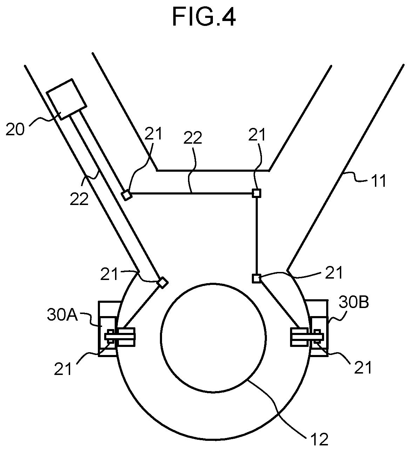

FIG. 4 is a schematic diagram illustrating the vicinity of the tower 12 of the offshore platform 1 in the planar view. In the vicinity of the tower 12 that is disposed on the floating object 11; a winch 20, a plurality of pulleys 21, and junction boxes 30A and 30B are disposed. The junction boxes 30A and 30B are chambers for housing device direct-connection terminals, each of which represents an example of a connecting unit that connects the array cable 2 to the power cable connected to the power equipment inside the nacelle 13. The winch 20 is an electric winch for reeling in and advancing a wire rope 22. The wire rope 22 is carried above the junction boxes 30A and 30B via the pulleys 21. Meanwhile, the junction boxes 30A and 30B have the same configuration. Hence, in the following explanation, when the junction boxes 30A and 30B need not be distinguished from each other, they are referred to as the junction boxes 30.

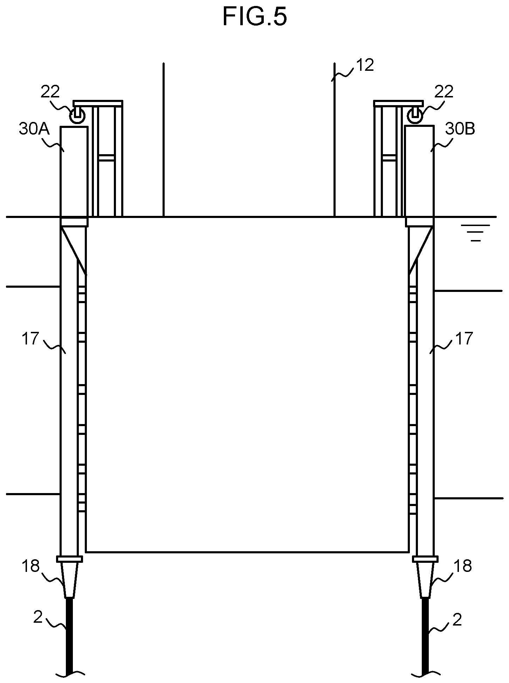

FIG. 5 is a schematic diagram in which the floating object 11 is viewed from a side. Below the junction boxes 30A and 30B, riser tubes 17 are disposed. The riser tubes 17 are hollow tubes disposed in the vertical direction along the floating object 11, and protect the array cables 2 passed through the hollow portions. Moreover, bed stiffeners 18 are disposed to limit the bending of the array cables 2, and are attached to the lower end of the riser tubes 17. The array cables 2 pass through the bed stiffeners 18 and the hollow portions of the riser tubes 17, and have their end portions fixed inside the junction boxes 30A and 30B.

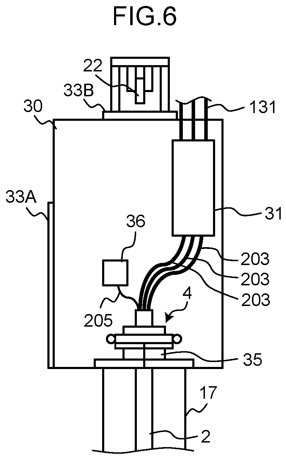

FIG. 6 is a schematic diagram illustrating the inside of the junction box 30. The junction box 30 includes a power cable junction box 31, an optical cable junction box 36, a door 33A, a ceiling door 33B, and an adapter 35. Inside the junction box 30, a retention unit 4 is disposed at the end portion of the array cable 2. The retention unit 4 represents the component for fixing the end portion of the array cable 2 to the inside of the junction box 30. Ahead of the retention unit 4, the covering body 227 and the spacer member 229 of the array cable 2 are removed, so that the optical cable 205 and the power lines 203 become exposed.

The door 33A is meant for enabling the workers to enter and leave the junction box 30, and is disposed on a side surface of the junction box 30. The ceiling door 33B is disposed on the ceiling of the junction box 30, and allows opening and closing of the opening portion provided on the ceiling. The optical cable junction box 36 uses a connector to connect the optical cable 205 to an optical cable, which is connected to the computer device inside the nacelle 13. The adapter 35 is a member having the shape of a halved hollow cylinder including a flange. The adapter 35 is disposed around the upper end of the riser tube 17. The adapter 35 is installed in between the retention unit 4 and the flooring of the junction box 30; supports the retention unit 4 at the upper end; and has the array cable 2 passed through the hollow portion.

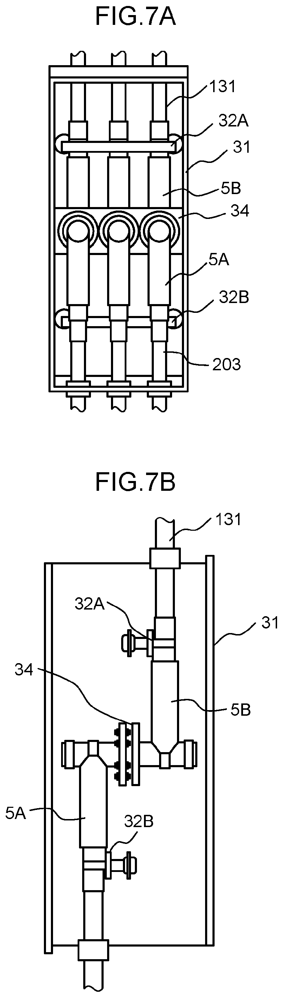

The power cable junction box 31 is a box for housing a device direct-connection terminal that connects the power lines 203 to section cables 131 that are connected to the electrical power facility inside the nacelle 13. FIG. 7A is a diagram illustrating the state in which the power cable junction box 31 is opened, and FIG. 7B is a diagram in which the device direct-connection terminals, which are housed in the power cable junction box 31, are viewed from a side. At an end portions of the power lines 203, a device direct-connection terminal 5A is disposed; and, at an end portions of the section cables 131 that are connected to the electrical power facility inside the nacelle 13, a device direct-connection terminal 5B is disposed. The device direct-connection terminals 5A and 5B are housed in the power cable junction box 31 in a connected state and are supported inside the power cable junction box 31 by a bracket 34. A cable cleat 32A supports three section cables 131, and a cable cleat 32B supports three power lines 203.

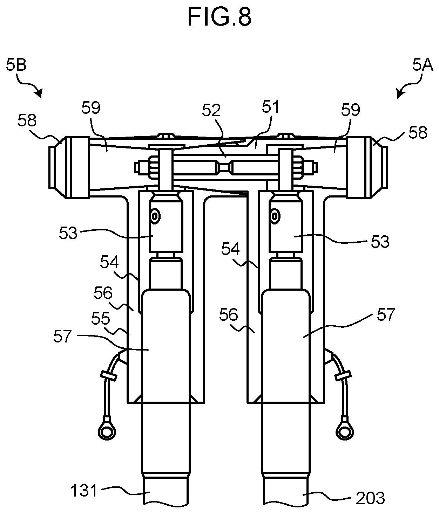

FIG. 8 is a diagram illustrating a structure of the device direct-connection terminals 5A and 5B. At the end portions of the power lines 203 and the end portions of the section cables 131, stress cones 57 having insulation properties are disposed. Moreover, terminals 53 having electrical conductivity are attached to the electrical conductors 207 of the power lines 203 and to the electrical conductors of the section cables 131. The stress cones 57 and the terminal 53 are covered by insulation layers 54 having insulation properties; by internal semiconductive layers 56; and by external semiconductive layers 55. A connecting bolt 52 having electrical conductivity electrically connects the terminal 53 of the device direct-connection terminal 5A to the terminal 53 of the device direct-connection terminal 5B. An insulating plug 59 having insulation properties seals the end portion of the connecting bolt 52 and is covered by a protection cap 58. A connector main body 51 is made of an insulating material and seals the connecting bolt 52.

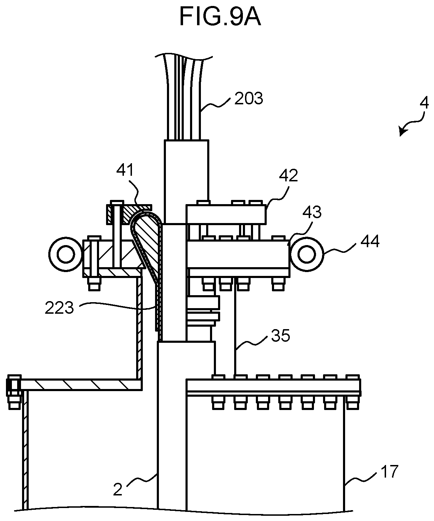

FIG. 9A is a half sectional view of the retention unit 4. The retention unit 4 bendingly holds the iron wire sheath 223 of the array cable 2, and sandwiches the array cable 2 to enable attachment, fixing, and removal of the array cable 2 with respect to the offshore platform 1. The retention unit 4 includes a wedge 41, a stopper 42, a clamping member 43, and an eyebolt 44. The retention unit 4 bendingly holds the iron wire sheath 223 using the wedge 41, the stopper 42, and the clamping member 43; and at the same time sandwiches the array cable 2. The retention unit 4 illustrated in FIG. 9A is only exemplary, and the structure of the retention unit 4 is not limited to the structure illustrated in FIG. 9A.

The clamping member 43 has the shape of a circular ring and is made of a metal. In the clamping member 43, a hole through which the array cable 2 is passed is formed to have a decreasing diameter from the upper side toward the lower side. The iron wire sheath 223 in the bent form is fixed in a sandwiched manner between the inner periphery of the hole and the wedge 41. The clamping member 43 has a half-split structure and has a plurality of holes formed on the outer periphery through which bolts are passed. At the time of attaching the retention unit 4 to the offshore platform 1, the clamping member 43 is mounted on the adapter 35 and is fixed to the upper-end flange of the adapter 35 using a plurality of bolts. At the time of removing the retention unit 4 from the offshore platform 1, the bolts are removed from the flange so that the retention unit 4 gets removed from the adapter 35. The clamping member 43 also represents an example of an attachment fixing unit meant for fixing a movement terminator 7 (explained later) and an energization terminator 8 (explained later) using bolts. A protective tube of the movement terminator 7 (explained later) and the energization terminator 8 (explained later) are attached and fixed to the upper surface side of the clamping member 43. Meanwhile, in the half-split clamping member 43, one half and the other half can be fastened using bolts oriented from one half toward the other half. Alternatively, the clamping member 43 can be configured to have a vertical two-layer structure, and the two layers can be layered and fixed using bolts in such a way that the orientation of the half-split shape intersects with the two layers, thereby ensuring that the array cable 2 is sandwiched in a reliable manner.

The eyebolt 44 representing an example of a hanger tool is disposed on the outer periphery of the clamping member 43 and, at the time of raising the retention unit 4, a wire rope is knotted. In the following explanation, the eyebolts are mentioned as examples of a hanger tool. The distance from the center of the retention unit 4 to the ends of the two eyebolts 44 in the horizontal direction is shorter than the inner diameter of the riser tubes 17. Hence, when the adapter 35 is removed, the retention unit 4 can be passed through the riser tube 17.

There are a plurality of wedges 41 fixed to the iron wire sheath 223 of the power line 203. When viewed from above, the wedges 41 have the shape of a circular ring. In the cross-sectional view, the upper side of the wedges 41 has a semicircular shape. On the lower side of the cross-sectional surface, the wedges 41 have a wedge shape having a decreasing width toward the lower side. In an identical manner to the clamping member 43, with a half-splitting shape, one half and the other half can be fastened using bolts oriented from one half toward the other half. A plurality of wedges 41 is hooked to the clamping member 43 and supports the power lines 203 to prevent the downward movement of the power lines 203. When the iron wire sheath 223 is sandwiched and fixed between the semicircular portion and the wedge-shaped portion of the wedges 41 and the stopper 42 and the clamping member 43, the sandwiching of the iron wire sheath 223 and the holding of the array cable 2 is achieved.

The stopper 42 is fixed to the clamping member 43 by a plurality of bolts, and suppresses the power lines 203 and fixes them to the retention unit 4. The hole in the stopper 42 through which the array cable 2 is passed has an increasing diameter from the upper side toward the lower side in a corresponding manner to the semicircular shape of the wedges 41. When the iron wire sheath 223 in the bent form is sandwiched and fixed between the inner periphery of the hole and the wedges 41, the array cable 2 gets sandwiched. Meanwhile, in an identical manner to the clamping member 43, the stopper 42 too can be configured to have a vertical two-layer structure, and the two layers can be layered and fixed using bolts in such a way that the orientation of the half-split shape intersects with the two layers, thereby ensuring that the array cable 2 is sandwiched in a reliable manner.

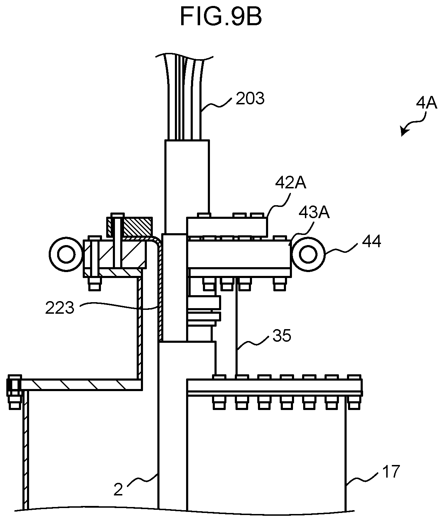

FIG. 9B is a half sectional view of a retention unit 4A representing a different example of the retention unit. With reference to the configuration of the retention unit 4, the retention unit 4A includes a stopper 42A and a clamping member 43A in place of the stopper 42 and the clamping member 43, respectively, and does not include the wedges 41. In the retention unit 4A, the iron wire sheath 223 in the bent form is sandwiched and fixed between the upper surface of the clamping member 43A and the lower surface of the stopper 42A. In the stopper 42A and the clamping member 43A, the hole through which the array cable 2 is passed can have a constant diameter from the upper side to the lower side. When the retention unit 4A having such a configuration is used, the task of attaching the retention unit 4A to the array cable 2 becomes relatively easier.

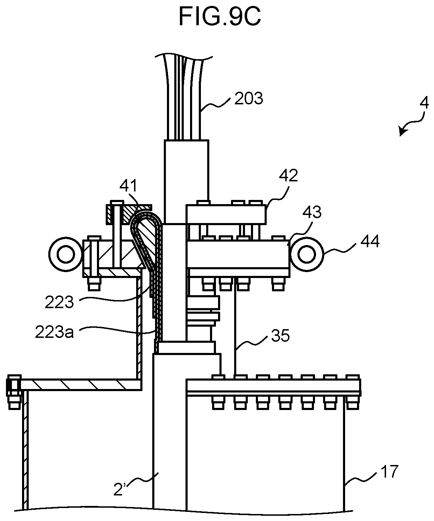

FIG. 9C is a half sectional view of the retention unit 4 in the case in which the array cable 2' illustrated in FIG. 3B is used. In that case, when the iron wire sheaths 223 and 223a are sandwiched and fixed between the semicircular portion and the wedge-shaped portion of the wedges 41 and the stopper 42 and the clamping member 43, the sandwiching of the iron wire sheaths 223 and 223a and the holding of the array cable 2' is achieved.

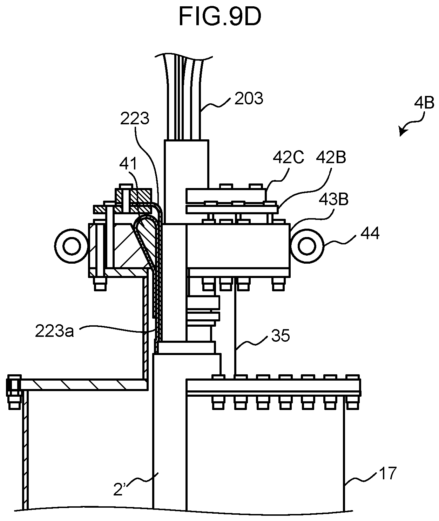

FIG. 9D is a half sectional view of a retention unit 4B representing a still different example of the retention unit in the case in which the array cable 2' illustrated in FIG. 3B is used. With reference to the configuration of the retention unit 4, the retention unit 4A includes a stopper 42B and a clamping member 43B in place of the stopper 42 and the clamping member 43, respectively, and additionally includes a stopper 42C. In the clamping member 43B, the hole through which the array cable 2' is passed has a decreasing diameter from the upper side toward the lower side. In the stoppers 42B and 42C, the hole through which the array cable 2' is passed can have a constant diameter from the upper side to the lower side. Using the retention unit 4B, the iron wire sheath 223a is sandwiched and fixed between the semicircular portion and the wedge-shaped portion of the wedges 41 and the stopper 42B and the clamping member 43B. Moreover, the iron wire sheath 223 is sandwiched and fixed between the upper surface of the stopper 42B and the lower surface of the stopper 42C. As a result, the sandwiching of the iron wire sheaths 223 and 223a and the holding of the array cable 2' is achieved.

Given below is the explanation about the method for keeping up the electric power transmission from the wind farm WF at the time of maintaining any of the offshore platforms 1. At the time of maintaining the concerned offshore platform 1, the maintenance is carried out by removing the array cables 2 from that offshore platform 1. However, if the array cables 2 that were connected to the offshore platform 1 that is under maintenance remain unconnected, the electric power generated by the other offshore platforms 1 in operation cannot be transmitted to the electric power substation.

In that regard, in the present embodiment, the array cables 2 that are connected to the offshore platform 1 under maintenance are removed; the removed array cables 2 are connected together to maintain the serial connection; and the electric power generated by the other offshore platforms 1 in operation is transmitted to the electric power substation. Moreover, in the first embodiment, regarding the offshore platform 1 for which the maintenance is completed, the serially-connected array cables 2 are separated from each other, and the separated array cables 2 are serially connected to the offshore platform 1 for which the maintenance is completed. Given below is the explanation of a method for removing the array cables 2 from the concerned offshore platform 1 and serially connecting the array cables 2; and a method for separating the serially-connected array cables 2 and serially connecting them to the concerned offshore platform 1 for which the maintenance is completed.

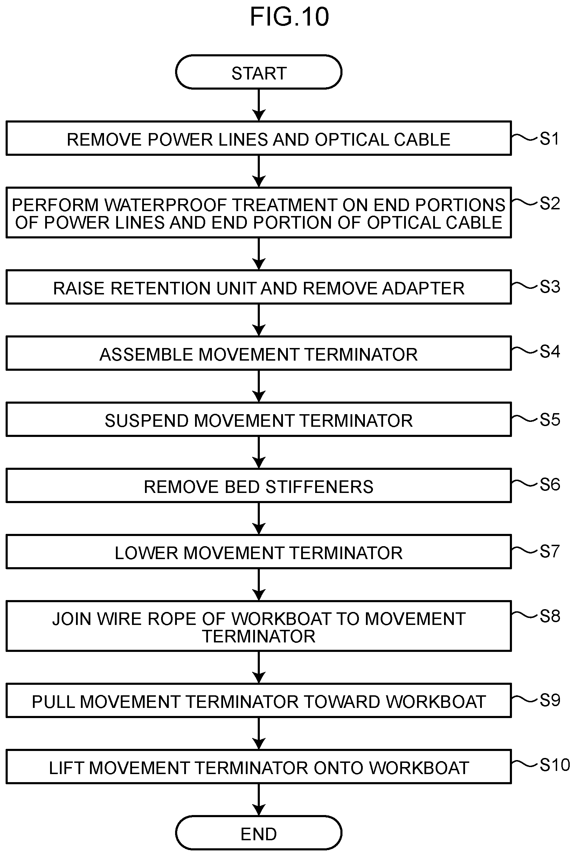

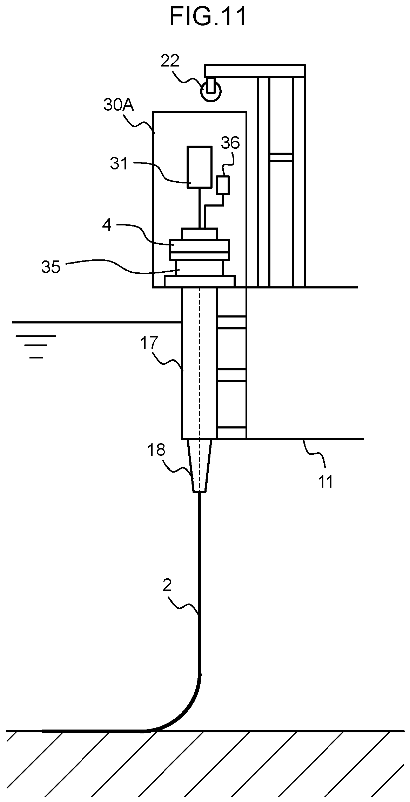

FIG. 10 is a flowchart for explaining the flow of a process for removing the array cables 2 from the concerned offshore platform 1 and lifting the removed array cables 2 onto a workboat for connecting them together in series. FIG. 11 is a schematic diagram illustrating the inside of the junction box 30A before the removal of the array cables 2. Before the removal of each array cable 2 from the concerned offshore platform 1, the end portion of the array cable 2 is retained inside the junction box 30A by the retention unit 4; the power lines 203 are connected to the section cables 131 in the power cable junction box 31; and the optical cable 205 is connected to the optical cable junction box 36.

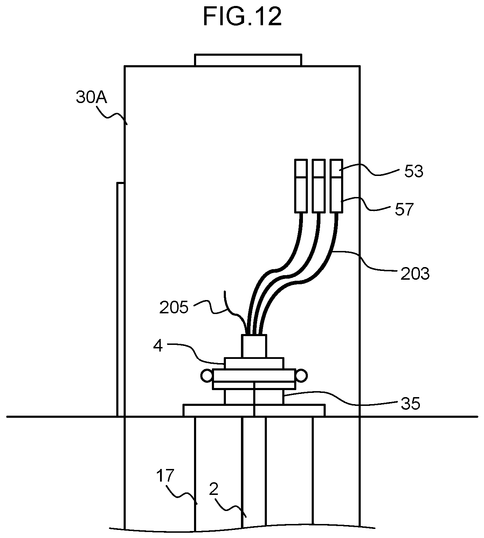

Firstly, a worker removes the power lines 203 from the power cable junction box 31, and removes the optical cable 205 from the optical cable junction box 36 (Step S1). FIG. 12 is a schematic diagram illustrating the state in which the power lines 203 and the optical cable 205 have been removed. Moreover, from the device direct-connection terminal 5B, the worker removes the device direct-connection terminal 5A present in the power cable junction box 31; so that the stress cones 57, which are attached to the leading ends of the power lines 203, and the terminals 53 become exposed. Furthermore, the worker removes the optical cable 205 from the optical cable junction box 36.

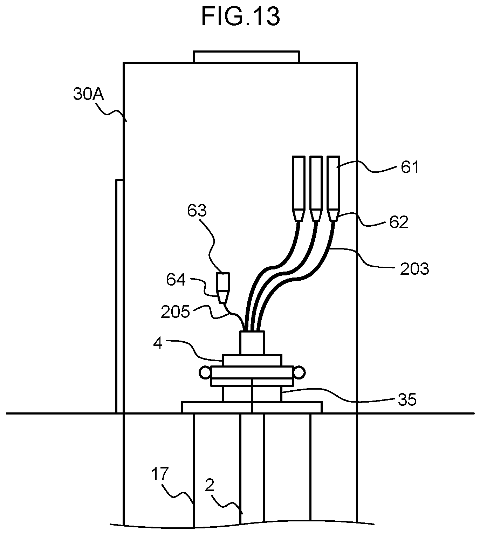

Then, the worker performs waterproof treatment on the end portions of the power lines 203 and the end portion of the optical cable 205 (Step S2). FIG. 13 is a schematic diagram illustrating the state in which waterproof treatment is performed on the end portions of the power lines 203 and the end portion of the optical cable 205. More particularly, the worker inserts the stress cones 57 and the terminals 53 into waterproof pipes 61, and inserts the end portion of the optical cable 205 into a waterproof pipe 63. The waterproof pipes 61 and 63 have the shape of a hollow cylinder with one end thereof remaining closed; and are made of a metal, for example. The waterproof pipes 61 and 63 represent examples of a waterproof member according to the present invention. Meanwhile, the waterproof pipes 61 and 63 can be covered by a sheath made of a synthetic resin. In order to ensure that the sea water does not enter into the waterproof pipes 61, the worker performs waterproof treatment at the opening portions of the waterproof pipes 61, in which the stress cones 57 and the terminals 53 are inserted, and forms waterproofed portions 62. Moreover, in order to ensure that the sea water does not enter into the waterproof pipe 63, the worker performs waterproof treatment at the opening portion of the waterproof pipe 63, in which the optical cable 205 is inserted, and forms a waterproofed portion 64.

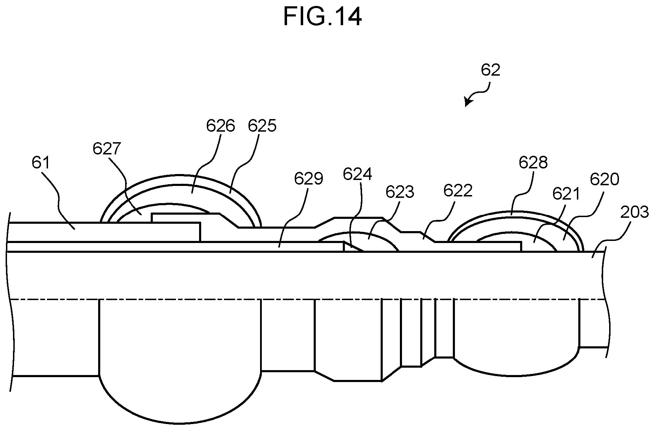

FIG. 14 is a schematic diagram illustrating the half sectional surface of the waterproofed portion 62. An adhesive water-tight sheet 629 is a water-tight sheet having adhesiveness, and is wound around the concerned power line 203. A self-adhesive tape 624 is a tape having self-adhesiveness and is wound around the concerned power line 203 in such a way that the level difference between the adhesive water-tight sheet 629 and the power line 203 gets eliminated. An aluminum tape 623 is a tape made of an aluminum foil having an adhesive applied to one side, and is wound to cover the end portion of the adhesive water-tight sheet 629 and the self-adhesive tape 624. A heat-shrinkable tube 622 is a tube that shrinks when heated. The heat-shrinkable tube 622 is overlayed on the end portions of the waterproof pipe 61, the adhesive water-tight sheet 629, the self-adhesive tape 624, the aluminum tape 623, and the power line 203. Once heated, the heat-shrinkable tube 622 shrinks and gets attached firmly to the end portions of the waterproof pipe 61, the adhesive water-tight sheet 629, the self-adhesive tape 624, the aluminum tape 623, and the power line 203. Meanwhile, on the inner side of the heat-shrinkable tube 622, an adhesion layer made of an adhesive agent can be formed, or an adhesion layer made of a pressure sensitive adhesive can be formed. An adhesive water-tight sheet 627 is a water-tight sheet having adhesiveness, and is wound at the end portion of the heat-shrinkable tube 622. An insulation tape 626 is a tape having insulation properties on account of having layering of a self-adhesive material made of a black polyethylene film and butyl rubber as the main components. The insulation tape 626 is wound to cover the adhesive water-tight sheet 627 and the end portion of the heat-shrinkable tube 622. A PVC tape 625 is an insulation tape in which an adhesive layer made of butyl rubber as the main component is bonded to a polyethylene substrate. The PVC tape 625 is wound to cover the insulation tape 626. An adhesive water-tight sheet 621 is a water-tight sheet having adhesiveness, and is wound to cover the end portions of the heat-shrinkable tube 622 and the power line 203. An insulation tape 620 is a tape having insulation properties on account of having layering of a self-adhesive material made of a black polyethylene film and butyl rubber as the main components. The insulation tape 620 is wound to cover the adhesive water-tight sheet 621, the end portion of the heat-shrinkable tube 622, and the end portion of the power line 203. A PVC tape 628 is an insulation tape in which an adhesive layer made of butyl rubber as the main component is bonded to a polyethylene substrate. The PVC tape 628 is wound to cover the insulation tape 620. Meanwhile, the waterproofed portion 64 is formed in an identical manner to the waterproofed portions 62.

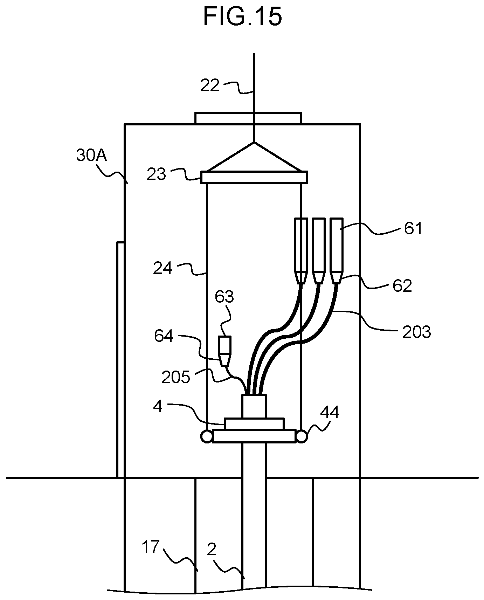

Subsequently, the worker raises the retention unit 4 and removes the adapter 35 (Step S3). FIG. 15 is a schematic diagram illustrating the state in which the adapter 35 is removed and the retention unit 4 is raised. The worker attaches a suspension balance 23, which represents an example of a suspension tool meant for suspending a retention unit using a wire rope, to the wire rope 22 inside the junction box 30A; and joins the suspension balance 23 and the eyebolt 44, which represents an example of a hanger tool, using a suspension rope. Moreover, the worker removes the bolt used for fixing the retention unit to the adapter 35 and removes the adapter 35 from the retention unit 4; and then raises the retention unit 4 by driving the winch 20.

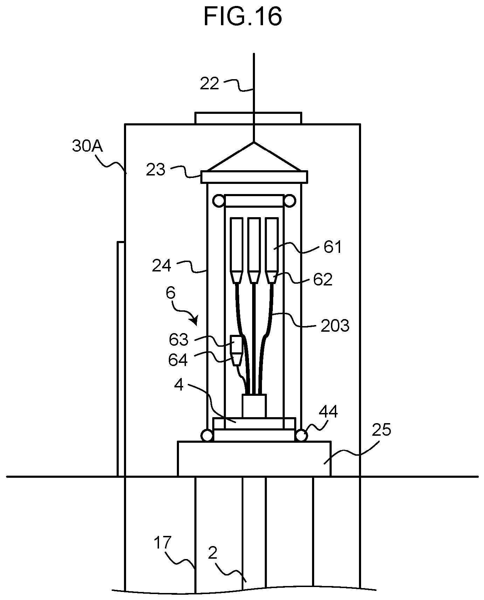

Then, the worker assembles the movement terminator 7, which represents an example of a cable movement object meant for moving the end portions of the power lines 203 on the workboat (Step S4). FIG. 16 is a schematic diagram illustrating the state in which the movement terminator 7 is assembled. Firstly, before assembling the movement terminator 7, a half-split temporary cradle 25 is placed in between the retention unit 4 and the riser tube 17, and the suspension balance 23 is lowered to mount the retention unit 4 on the temporary cradle 25. The temporary cradle 25, on which the retention unit 4 is mounted, is formed in such a way that, in the clamping member 43, the lower side of the hole through which the bolt is passed becomes exposed. The temporary cradle 25 can have a structure in which, for example, two metallic blocks are arranged to sandwich the riser tube 17 and, when the retention unit 4 is mounted, the lower side of the hole through which the bolt is passed into the clamping member 43 becomes exposed in between the two blocks. With such a structure, on the lower side of the hole through which the bolt is passed in the clamping member 43, the bolt can be fastened using a nut, and a protective tube 71 (explained later) can be fixed.

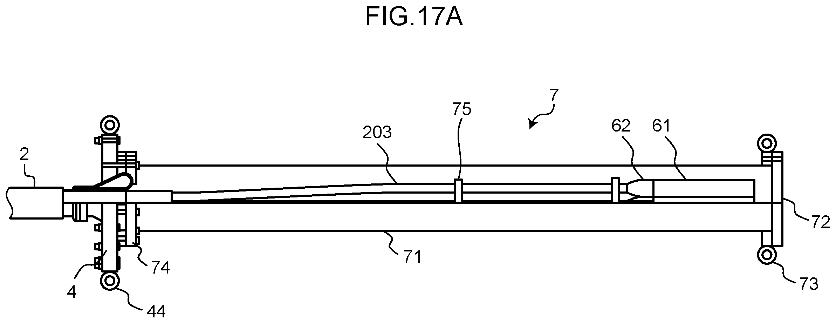

FIG. 17A is a half sectional view of the movement terminator 7. The movement terminator 7 includes a retention unit 4, a protective tube 71, a lid 72, an eyebolt 73 representing a hanger tool, a flange 74, and a binding tool 75. The protective tube 71 represents an example of a protective member for protecting the power lines 203 and the optical cable 205 exposed from the array cable; and has the shape of a hollow cylinder open at both ends in the longitudinal direction and is made of a metal. When put into the sea, the protective tube 71 sinks under its own weight. In order to ensure that the protective tube 71 sinks under its own weight in the sea, for example, the weight of the assembled movement terminator 7 can be set to be greater than the weight of the sea water in the same volume as the volume of the movement terminator 7. Moreover, in order to ensure that the protective tube 71 sinks under its own weight in the sea, for example, a plurality of through holes from inside to outside can be formed on the protective tube 71 so that, when put into the sea, the sea water flows into the protective tube 71 and, when taken out from the sea, the sea water flows out from the protective tube 71. In the protective tube 71, one end has the flange 74 formed thereon, and the other end is kept open. The open end of the protective tube 71 has the metallic lid 72 attached thereto with a bolt, and thus becomes closed. The eyebolt 73 is disposed at that end portion of the protective tube 71 at which the lid 72 is attached, and a wire rope 22 is knotted. Meanwhile, the protective tube 71 can be made of resin. Moreover, as a substitute protective member in place of the protective tube 71, for example, it is possible to use a cylindrical object made of a metallic mesh, or it is possible to place a plurality of stud bolts in a circular manner so as to enclose the waterproof pipes 61 and 63 and the power lines 203. Alternatively, for example, it is possible to fasten columnar members to the retention unit 4 and the lid 72 using bolts, so that the waterproof pipes 61 and 63 and the power lines 203 are enclosed by and held within the columnar members. In that case, the columnar members need not necessarily be arranged in a circular manner.

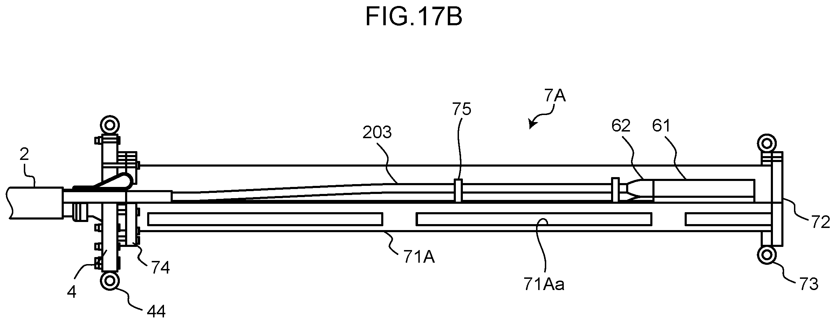

FIG. 17B is a half sectional view of a movement terminator 7A representing a different example of the movement terminator. The movement terminator 7A includes a protective tube 71A in place of the protective tube 71 of the movement terminator 7. The protective tube 71A has slits 71Aa formed thereon for allowing the sea water to enter. The slits 71Aa extend in the longitudinal direction of the protective tube 71A, and are formed in plurality on the outer periphery of the protective tube 71A.

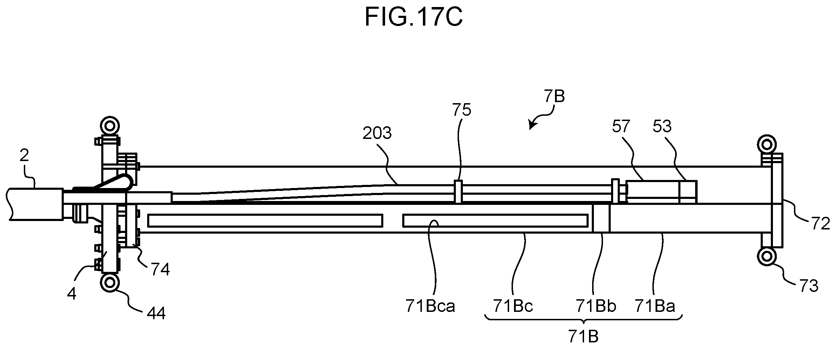

Meanwhile, the waterproof member can be integrated with some part of the protective member. FIG. 17C is a half sectional view of a movement terminator 7B representing a still different example of the movement terminator. The movement terminator 7B includes a protective tube 71B in place of the protective tube 71 of the movement terminator 7. However, in the case of using the movement terminator 7B, the waterproof pipes 61 and the waterproofed portions 62 are not provided corresponding to the power lines 203, and the waterproof pipe 63 and the waterproofed portion 64 are not provided corresponding to the optical cable 205. The protective tube 71B includes a waterproof/protective member 71Ba, a waterproofed portion 71Bb, and a lower portion 71Bc. The waterproof/protective member 71Ba is an airtight member configured by integrating a waterproof member and some part of a protective member. The waterproofed portion 71Bb is the portion through which the power lines 203 and the optical cable 205 are passed and is obtained by performing waterproof treatment. In the waterproofed portion 71Bb, the portion through which the power lines 203 and the optical cable 205 are passed is formed in a cylindrical shape. In the lower portion 71Bc, slits 71Bca are formed for allowing the sea water to enter. The slits 71Bca extend in the longitudinal direction of the lower portion 71Bc, and are formed in plurality on the outer periphery of the lower portion 71Bc.

Any of the protective members explained above holds therein the power lines 203 and the optical cable 205 that have the end portions subjected to waterproof treatment. At the same time, the protective member sinks under its own weight because the sea water is allowed to enter into the portion other than the waterproof member. Moreover, since the power lines 203 and the optical cable 205 are bound using the binding tool 75, they can be easily held inside even if the structure of the protective members is simplified.

At the time of assembling the movement terminator 7; the waterproof pipes 61, the waterproofed portions 62, the waterproof pipe 63, and the waterproofed portion 64 are inserted into the protective tube 71, and the flange 74 is fixed to the retention unit 4 using bolts. At the time of inserting the waterproof pipes 61 and 63 and the waterproofed portions 62 and 64 in the protective tube 71, the three power lines 203 are bound together using the binding tool 75 such as a tape or a metal band, and are tied up in accordance with the inner diameter of the protective tube 71. The lid 72 is attached to the protective tube 71 using bolts, so that the end portion of the protective tube 71 is closed. The protective tube 71, which includes the waterproof pipes 61 and 63 representing the waterproof members, represents an example of a protective member according to the present invention. Meanwhile, the protective tube 71 can be divided into two sides, namely, the side including the flange 74 and the side including the eyebolt 73. At the time of assembling the movement terminator 7, the side including the flange 74 and the side including the eyebolt 73 can be joined. Moreover, the movement terminator 7 can have a structure in which the eyebolt 73 is disposed on the lid 72. The weight of the assembled movement terminator 7 is greater than the weight of the sea water in the same volume as the volume of the movement terminator 7. Hence, when put into the sea, the movement terminator 7 sinks under its own weight in the sea.

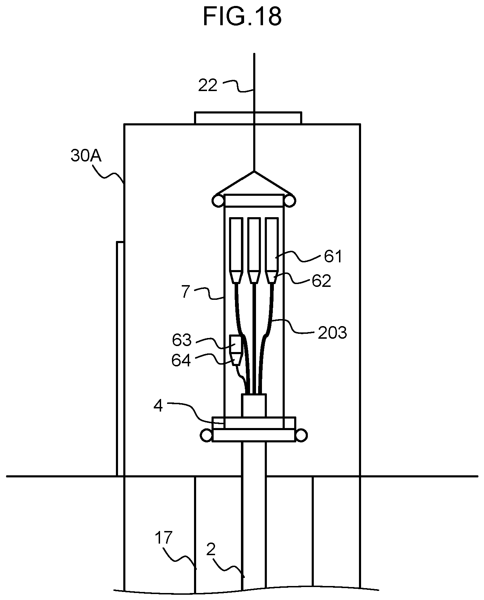

Subsequently, the worker suspends the movement terminator 7 by changing the connection of the wire rope 22 from the suspension balance 23 to the eyebolt 73, and removes the temporary cradle 25 (Step S5). FIG. 18 is a schematic diagram illustrating the suspended state of the movement terminator 7. The outer diameter of the movement terminator 7 as well as the outer diameter of the retention unit 4 is smaller than the inner diameter of the riser tube 17. Hence, the movement terminator 7 can be lowered up to the riser tube 17.

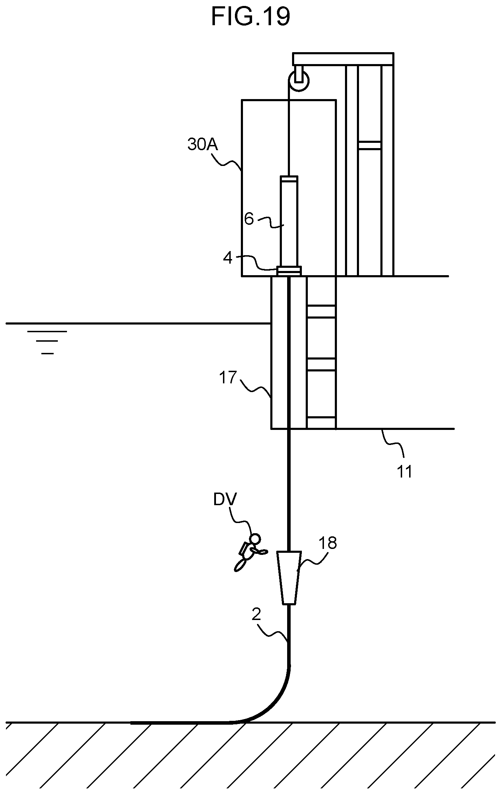

Then, the worker removes the bed stiffener 18 from the concerned offshore platform 1 (Step S6). FIG. 19 is a schematic diagram illustrating the state in which the bed stiffener 18 is removed from the offshore platform 1. At Step S6, a diver DV retrieves the bed stiffener 18 from the floating object 11 in the sea. The bed stiffener 18 that is removed from the floating object 11 is moved down to a position at which there is no interference with the movement terminator 7 that is lowered.

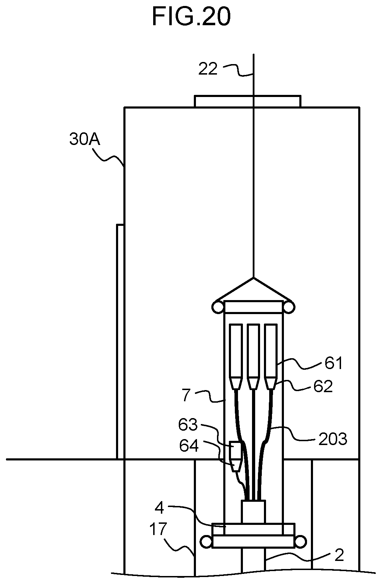

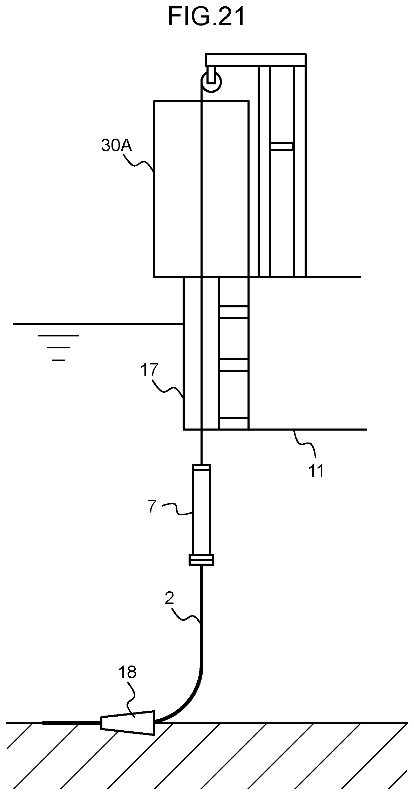

Subsequently, the worker drives the winch 20 and lowers the movement terminator 7 (Step S7). FIG. 20 is a schematic diagram illustrating the movement terminator 7 being lowered. Since the outer diameter of the movement terminator 7 as well as the outer diameter of the retention unit 4 is smaller than the inner diameter of the riser tube 17, the movement terminator 7 moves down inside the riser tube 17 because of its own weight. The movement terminator 7 that is lowered comes out from the lower end of the riser tube 17 and moves toward the sea. FIG. 21 is a schematic diagram illustrating the movement terminator 7 that has moved into the sea.

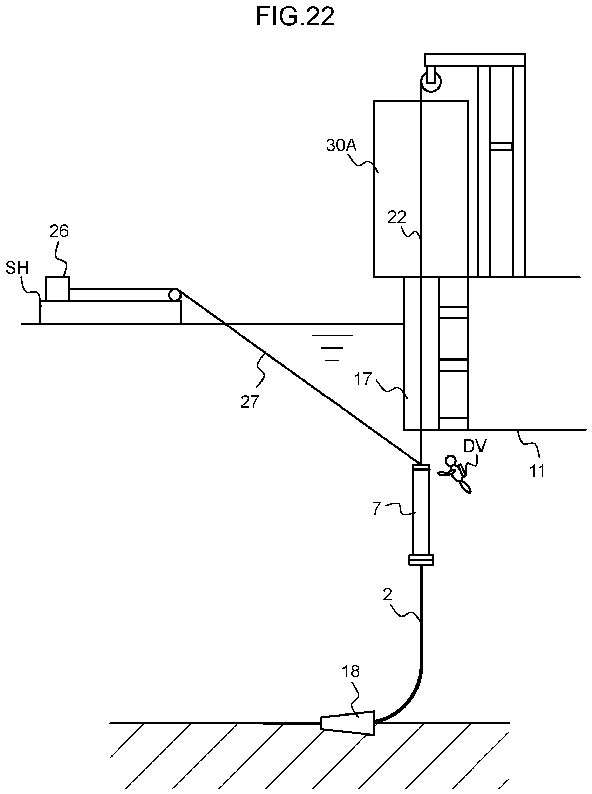

Subsequently, the diver DV joins a wire rope 28, which is rolled in a winch 26 of the workboat SH, to the movement terminator 7 in the sea (Step S8). FIG. 22 is a schematic diagram illustrating the state in which a wire rope 27 is joined to the eyebolt 73 of the movement terminator 7. After joining the wire rope 27 to the movement terminator 7 when the movement terminator 7 is present in between the sea level and the bottom of the sea, the diver DV removes the wire rope 22 from the movement terminator 7. Due to the action of the winch 26, the movement terminator 7 does not reach the bottom of the sea. Hence, it is possible to have the water pressure resistance of the movement terminator 7 to be lower than the water pressure at the bottom of the sea where the array cables 2 are laid.

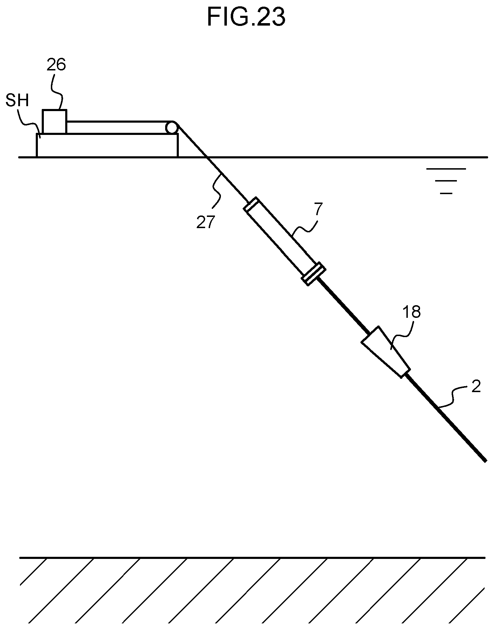

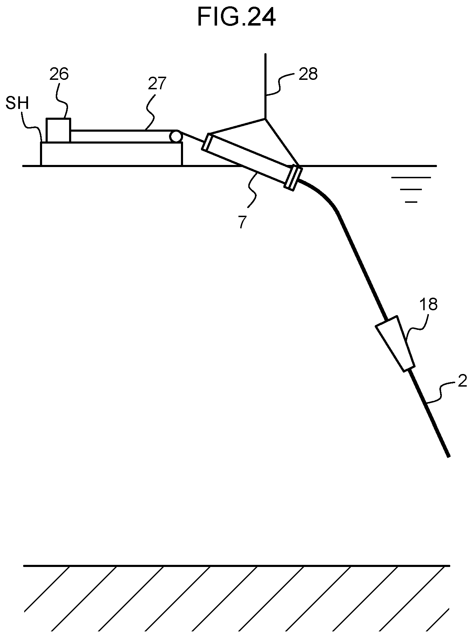

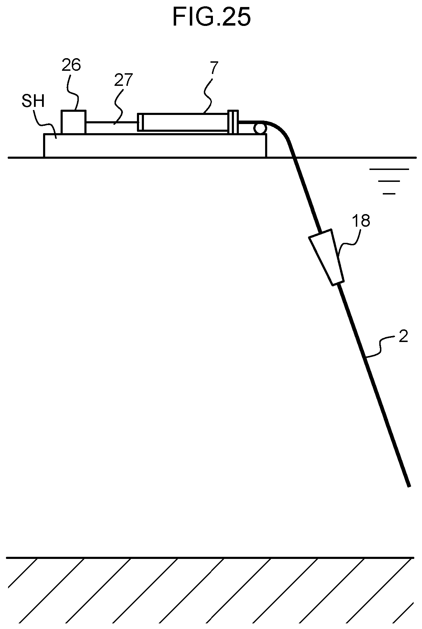

Subsequently, the worker drives the winch 26 and pulls the movement terminator 7 toward the workboat (Step S9). FIG. 23 is a schematic diagram illustrating the state in which the movement terminator 7 is pulled toward the workboat SH. Then, the worker joins the wire rope 28, which is a part of a crawler crane (not illustrated) provided in the workboat SH, to the movement terminator 7 and lifts the movement terminator 7 onto the workboat SH (Step S10). FIG. 24 is a schematic diagram illustrating the task of lifting the movement terminator 7 onto the workboat SH using the wire rope 28. As a result of using a crawler crane, as compared to the case in which the movement terminator 7 is lifted onto the workboat SH using only the winch 26, the load exerted on the movement terminator 7 can be held down. As illustrated in FIG. 25, the movement terminator 7 is lifted onto the workboat SH due to the crawler crane and the winch 26.

Also regarding the retention unit 4 of the junction box 30B and the array cable 2 retained in the junction box 30B, the removal of the retention unit 4 and the array cable 2 as well as the assembly of the movement terminator 7 is performed according to the identical processes to the processes explained above; and, after being lowered into the sea from the riser tube 17, the movement terminator 7 is lifted onto the workboat SH.

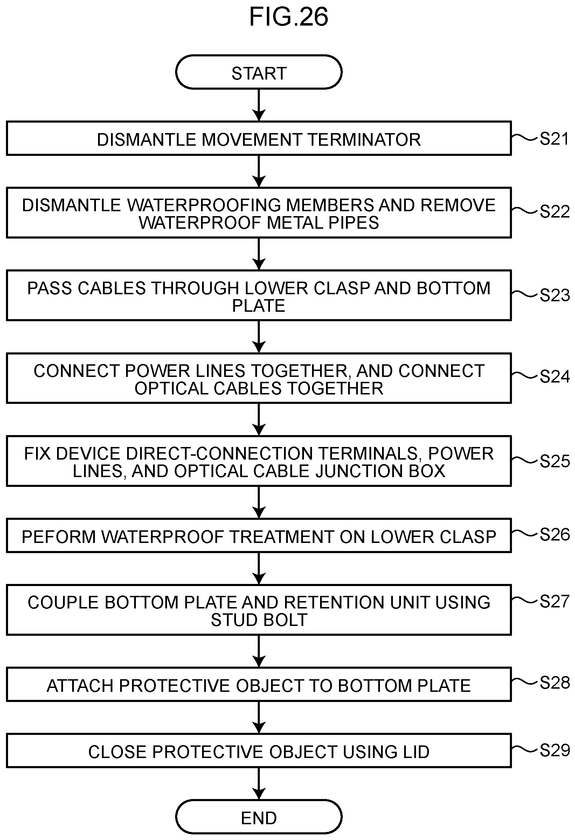

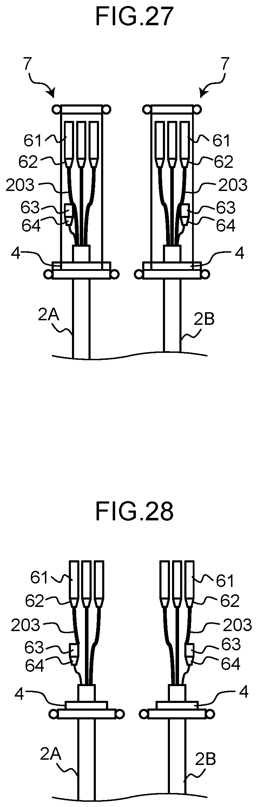

Given below is the explanation of the step of serially-connecting the array cables 2 that are lifted onto the workboat SH. FIG. 26 is a flowchart for explaining the flow of a process for serially connecting the array cables 2. FIG. 27 is a schematic diagram illustrating the movement terminator 7 that was assembled in the junction box 30A and that was lifted onto the workboat SH and illustrating the movement terminator 7 that was assembled in the junction box 30B and that was lifted onto the workboat SH. In the explanation given below, for explanatory convenience, the array cable 2 that is drawn from the junction box 30A and that is fixed to the retention unit 4 is referred to as an array cable 2A, and the array cable 2 that is drawn from the junction box 30B and that is fixed to the retention unit 4 is referred to as an array cable 2B. The array cables 2A and 2B that are lifted onto the workboat SH are held on the workboat SH.

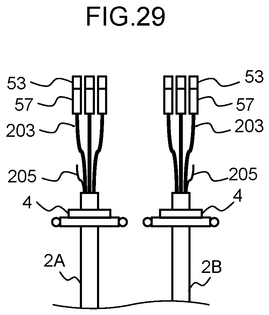

Firstly, a worker removes the protective tube 71 of the movement terminator 7 from the retention unit 4 and dismantles the movement terminator 7 (Step S21). FIG. 28 is a schematic diagram illustrating the state in which the protective tube 71 is removed from the retention unit 4. Subsequently, the worker dismantles the waterproofed portions 62 and 64, and removes the waterproof pipes 61 and 63 from the power lines 203 (Step S22). FIG. 29 is a schematic diagram illustrating the state in which the waterproofed portions 62 and 64 are dismantled and the waterproof pipes 61 and 63 are removed from the power lines 203.

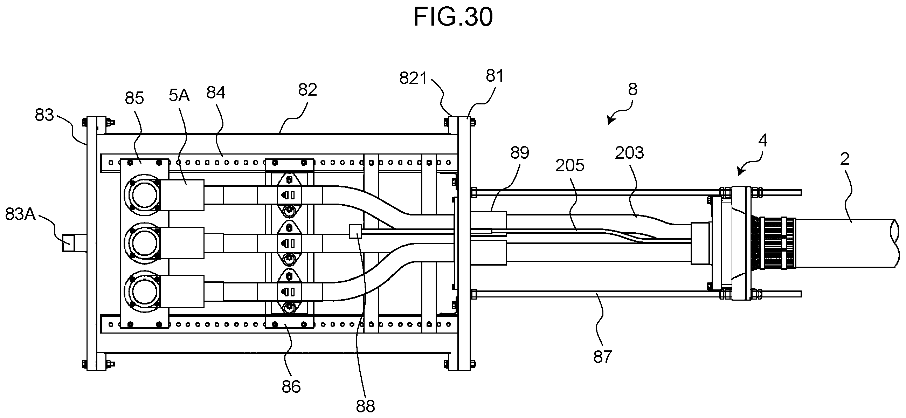

Then, the worker assembles the energization terminator 8 representing an example of a connector for serially connecting the array cables 2A and 2B. FIG. 30 is a diagram illustrating an internal configuration of the energization terminator 8. The energization terminator 8 includes a bottom plate 81, a protective object 82, a lid 83, a mount 84, a connector cleat 85, a cable cleat 86, a stud bolt 87, an optical cable junction box 88, a lower clasp 89, and the retention unit 4.

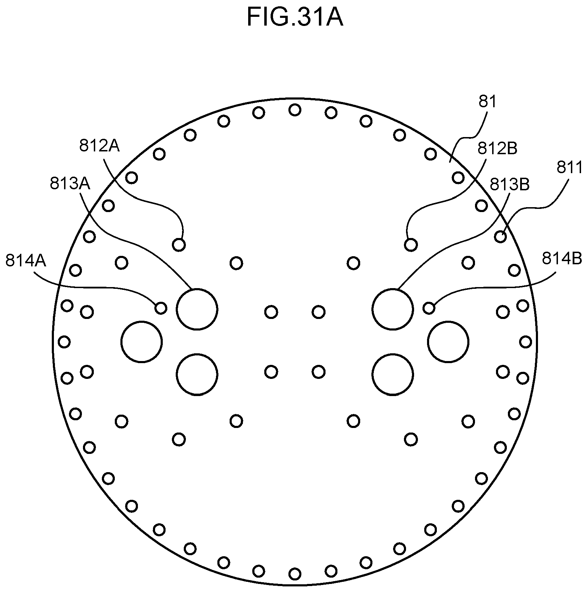

The bottom plate 81 is a circular plate and is made of, for example, stainless-steel. In FIG. 31A is illustrated a planar view of the bottom plate 81. The bottom plate 81 has through holes 811, screw holes 812A and 812B, cable holes 813A and 813B, and optical cable holes 814A and 814B. A plurality of through holes 811 is used for passing the bolts that enable fixing the protective object 82 to the bottom plate 81. The through holes 811 are formed on the outer periphery of the bottom plate 81. The cable holes 813A and 813B are used for passing the power lines 203. The three cable holes 813A are arranged into a triangle, and are used for passing the three power lines 203 of the array cable 2A. The three cable holes 813B are arranged into a triangle, and are used for passing the three power lines 203 of the array cable 2B. The optical cable holes 814A and 814B are used for passing the optical cables 205. The optical cable hole 814A is used for passing the optical cable 205 of the array cable 2A, and the optical cable hole 814B is used for passing the optical cable 205 of the array cable 2B.

A plurality of screw holes 812A and a plurality of screw holes 812B is thread-cut as female screws to which one end of the stud bolt 87, which represents an example of a coupling tool, is attached. In the following example, the stud bolt is cited as an example of a coupling tool that enables adjustment of the distance between the bottom plate 81 and the clamping member 43 of the retention unit 4, and enables coupling and fixing of the bottom plate 81 and the clamping member 43 of the retention unit 4. The screw holes 812A are formed at regular intervals to enclose the three cable holes 813A, and the screw holes 812B are formed at regular intervals to enclose the three cable holes 813B. To the screw holes 812A is attached the stud bolt 87 that enables coupling of the retention unit 4 that has the array cable 2A fixed thereto. To the screw holes 812A is attached the stud bolt 87 that enables coupling of the retention unit 4 that has the array cable 2B fixed thereto.

Meanwhile, regarding the retention unit 4, two retention units 4 can be fixed in an integrated manner using an integrating component (not illustrated) and their distance to the bottom plate 81 can be collectively adjusted using a coupling tool. As a result, the two retention units 4 can be tightly held on the bottom plate 81, and the power lines 203 from which the iron wire sheath 223 is peeled off can be protected in a more reliable manner. Alternatively, the configuration can be such that the distance to the bottom plate 81 can be independently adjusted for the two retention units 4 using coupling tools. As a result, regarding each of the two array cables 2A and 2B, the distance between the bottom plate 81 and each retention unit 4 can be adjusted and fixed in such a way that there is appropriate deflection of each power line 203 that is exposed in the sea because the iron wire sheath 223 has been peeled off.

The lower clasp 89 is a clasp through which the power lines 203 and the optical cable 205 are passed, and is fixed to the bottom plate 81. In the lower clasp 89, the portion through which the power lines 203 and the optical cable 205 are passed is cylindrical in shape. Moreover, in the lower clasp 89, the portion through which the power lines 203 are passed has a greater inner diameter than the outer diameter of the power lines 203. In the lower clasp 89, the portion through which the power lines 203 are passed can have the inner diameter large enough to enable passage of the stress cones 57; or, when the terminals 53 are attached to the end portions of the power lines 203, can have the inner diameter large enough to enable passage of the terminals 53. The lower clasp 89 is made of stainless-steel, for example.

The protective object 82 has a hollow columnar shape and is made of stainless-steel, for example. In the protective object 82, one end has a flange 821 formed thereon, and the other end is kept open. The open end of the protective object 82 has the metallic lid 83 attached thereto with a bolt, and thus becomes closed. The lid 83 includes an eyebolt 83A to which a wire rope is joined. The connector cleat 85 is a plate-like member that supports the device direct-connection terminals 5A and 5B that are disposed at the leading end of the power lines 203. The connector cleat 85 is desirably an insulating object with the aim of holding down heat generation attributed to the induction of the electric current flowing through the power lines 203. The cable cleat 86 is a plate-like member that supports the power lines 203 housed in the protective object 82. The optical cable junction box 88 connects the optical cable 205 of the array cable 2A to the optical cable 205 of the array cable 2B. The optical cable junction box 88 is housed in the protective object 82 and is fixed to the mount 84. The bottom plate 81, the protective object 82, and the lid 83 represent an example of a protective object according to the present invention.

The mount 84 is a platform on which the connector cleat 85 and the cable cleat 86 are fixed. The mount 84 has a plurality of holes formed thereon for passing bolts. The connector cleat 85 and the cable cleat 86 are fixed to the mount 84 using the bolts passed through those holes. The stud bolt 87 has one end thereof attached to the screw holes 812A and 812B, has the other end thereof attached to the clamping member 43, and enables joining of the bottom plate 81 and the retention unit 4. As a result of using the stud bolt 87, it becomes possible to adjust the distance between the bottom plate 81 and the retention unit 4, and to hold down the deflection of the power lines 203 between the bottom plate 81 and the retention unit 4. The mount 84 is made of stainless-steel, for example. Since the mount 84 has a plurality of holes formed thereon, it becomes possible to adjust, in detail, the positions for attaching the connector cleat 85 and the cable cleat 86. Meanwhile, for example, the mount 84 can be fixed to the inner surface of the protective object 82 using a foot scaffolding, so that the movement of the mount 84 inside the protective object 82 can be held down.

Meanwhile, the energization terminator 8 can be equipped with a mechanism for adjusting the ratio of the length of the portion of the power lines 203 placed on the outside of the protective object 82 and the length of the portion of the power lines 203 housed inside the protective object 82. As a result of providing such a mechanism, it becomes possible to further hold down the deflection of the power lines 203.

As a modification example of the energization terminator 8, the connector cleat 85 can be equipped with a mechanism for independently adjusting the fixed position of the device direct-connection terminal 5A or the device direct-connection terminal 5B of the power lines 203. Moreover, the cable cleat 86 can be equipped with a mechanism for independently adjusting the fixed positions of the power lines 203. As a result of providing such mechanisms, it becomes possible to further hold down the deflection in the power lines 203.

The mount 84 and the connector cleat 85 constitute a position adjustment/fixing unit that, inside the protective object 82, enables adjusting and fixing the positions of the device direct-connection terminals 5A and 5B in the state in which the device direct-connection terminals 5A and 5B are connected. Meanwhile, the position adjustment/fixing unit inside the protective object 82 need not necessarily have a structure for adjusting and fixing the distance between the bottom plate 81 and the retention unit 4 in a coupling tool on the outside of the protective object 82, and can be provided as a separate unit. That is, on the outside of the protective object 82, if the bottom plate 81 and the retention unit 4 are fixed at a predetermined distance at which there is no excessive deflection in the power lines 203, then the coupling tool can be used only for fixing without adjusting the distance, and the positions of the device direct-connection terminals 5A and 5B can be adjusted and fixed only inside the protective object 82.

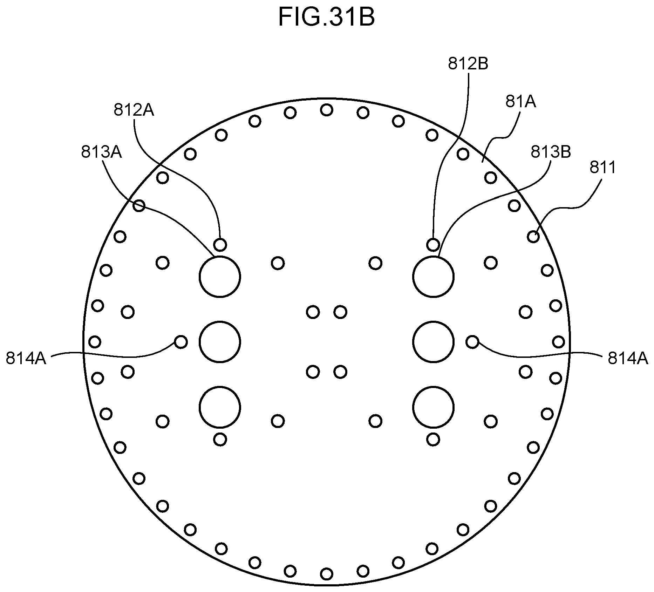

The bottom plate 81 can be substituted with a bottom plate 81A as a different example. In FIG. 31B is illustrated a planar view of the bottom plate 81A representing a different example. On the bottom plate 81A, three cable holes 813A are formed in a linear manner. Moreover, three cable holes 813B are also formed in a linear manner. If the three cable holes 813A and the three cable holes 813B are formed in a linear manner, the three power lines 203 also get arranged in a linear manner inside the protective object 82, and it becomes easier to secure the offset. For example, it becomes possible to secure the arrangement in the linear manner and the offset in the perpendicular direction. Hence, it becomes easier to assemble the energization terminator 8. Moreover, there is reduction in the occurrence of a situation in which the power lines 203 bend and come in contact with the edges of the cable holes 813A and the cable holes 813B.

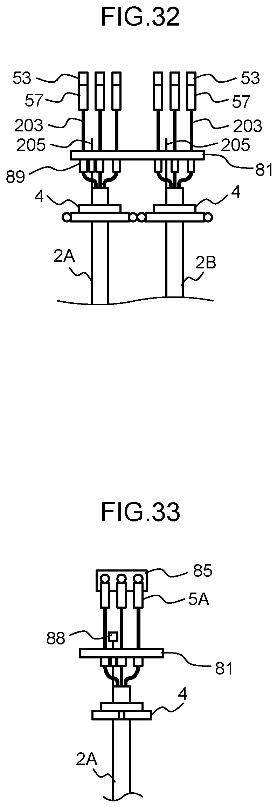

FIGS. 32 to 38 are schematic diagrams illustrating a step of assembling the energization terminator 8. At the time of assembling the energization terminator 8, as illustrated in FIG. 32, firstly, the worker passes the power lines 203 and the optical cable 205 through the lower clasp 89 and the bottom plate 81 (Step S23).

Subsequently, the worker connects the power lines 203 of the array cable 2A and the power lines 203 of the array cable 2B, as well as connects the optical cable 205 of the array cable 2A and the optical cable 205 of the array cable 2B (Step S24). FIG. 33 is a schematic diagram illustrating the state in which the power lines 203 are connected and the optical cable 205 is connected. More particularly, the worker assembles the device direct-connection terminals 5A and 5B that include the stress cones 57 and the terminals 53, and connects the device direct-connection terminals 5A and 5B using an insulation bushing having insulating properties. The device direct-connection terminals 5A and 5B represent examples of a connecting unit in a connecting object. Then, the worker fixes the insulation bushing to the connector cleat 85, and fixes the power lines 203 to the cable cleat 86. Moreover, the optical cable 205 of the array cable 2A and the optical cable 205 of the array cable 2B are connected in the optical cable junction box 88.

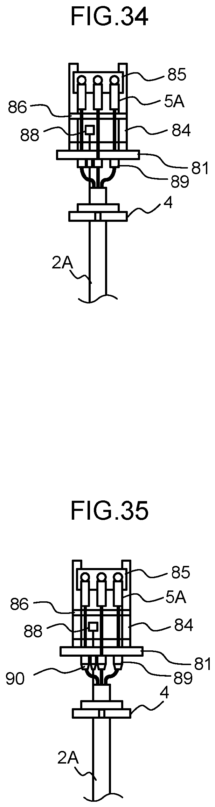

Subsequently, the worker fixes the device direct-connection terminals 5A and 5B, the power lines 203, and the optical cable junction box 88 to the mount 84 (Step S25). FIG. 34 is a schematic diagram illustrating the device direct-connection terminals 5A and 5B, the power lines 203, and the optical cable junction box 88 that have been fixed. More particularly, the worker fixes the connector cleat 85 to the mount 84; and fixes the cable cleat 86, to which the power lines 203 are fixed, to the mount 84. Moreover, the worker fixes the optical cable junction box 88 to the mount 84. The worker fixes, to the bottom plate 81, the mount 84 to which the connector cleat 85, the cable cleat 86, and the optical cable junction box 88 are fixed.

Subsequently, the worker performs waterproof treatment on the lower clasp 89 on the side of the retention unit 4 (Step S26). FIG. 35 is a schematic diagram illustrating a waterproofed portion that is formed by performing the waterproof treatment. In order to prevent the sea water from entering the retention unit 4 on the side of the mount 84, the worker forms a waterproofed portion 90 by performing waterproof treatment at the opening present in the lower clasp 89 on the side of the retention unit 4. In an identical manner to the waterproofed portions 62 and 64, the waterproofed portion 90 is formed using a heat-shrinkable tube and a plurality of tapes. Meanwhile, since the energization terminator 8 is placed at the bottom of the sea, it is desirable that the waterproofed portion 90 has better waterproofing performance than the waterproofing performance of the waterproofed portions 62 and 64 and is able to withstand the water pressure at the bottom of the sea. The waterproofing performance (the water pressure resistance) of the waterproofed portion 90 can be enhanced, for example, by increasing the length over which the heat-shrinkable tube 622 tightly adheres and covers the waterproof pipe 61 and the internal sheath 217. In the energization terminator 8, as a result of using the waterproofed portion 90, it becomes possible to achieve better waterproofing performance than the waterproofing performance of the waterproofed portions 62 and 64 of the movement terminator 7 that reach only up to a higher position than the bottom of the sea, and it becomes possible to withstand the water pressure at the bottom of the sea. Meanwhile, it is desirable that the heat-shrinkable tube used in the waterproofed portion 90 includes a metallic layer. Moreover, in the waterproofed portion 90, in order to enhance the waterproofing performance, it is possible to use an aluminum foil or an aluminum tape.

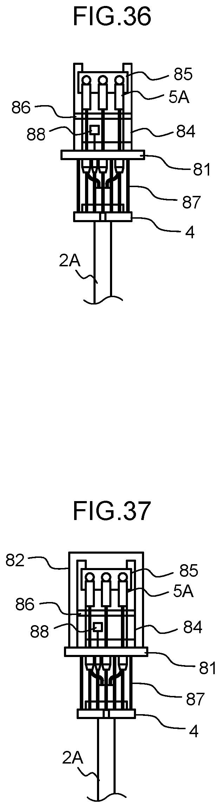

Subsequently, the worker couples the bottom plate 81 and the retention unit 4 using the stud bolt 87, and adjusts the distance between the bottom plate 81 and the retention unit 4 (Step S27). FIG. 36 is a schematic diagram illustrating the state in which the bottom plate 81 and the retention unit 4 are coupled using the stud bolt 87. In the bottom plate 81, the screw holes 812A are formed corresponding to the retention unit 4 that is fixed to the array cable 2A, and the screw holes 812B are formed corresponding to the retention unit 4 that is fixed to the array cable 2B. In the state in which the distance between the bottom plate 81 and the retention unit 4 is adjusted using the stud bolt 87 representing a coupling tool, the bottom plate 81 and the retention unit 4 are fixed to each other. In the retention unit 4, the stud bolt 87 is passed through the hole that is formed in the clamping member 43 for enabling passage of a bolt. The stud bolt 87 and the retention unit 4 are fixed using a nut that sandwiches both ends of the hole. The distance between the retention unit 4, to which the array cable 2A is fixed, and the bottom plate 81 can be adjusted independently from the distance between the retention unit 4, to which the array cable 2B is fixed, and the bottom plate 81.

Meanwhile, the screw holes 812A and 812B are formed not to pass through toward the opposite side of the side on which the stud bolt 87 is attached. However, if the screw holes 812A and 812B are formed to pass through toward the opposite side of the side on which the stud bolt 87 is attached, it is desirable to perform waterproof treatment when the stud bolt 87 is attached.

The coupling tool used for adjusting the distance between the bottom plate 81 and the retention unit 4 and fixing them is not limited to the stud bolt 87. Alternatively, for example, it is possible to use L angles having a plurality of bolt holes formed thereon. In the case of using L angles as the coupling tool, the L angles can be fixed to the bottom plate 81, adjustment can be performed to have an appropriate distance between the bottom plate 81 and the retention unit 4, and the L angles and the retention unit 4 can be fixed using bolts. Moreover, for example, the coupling tool can be fixed using a single spacer or a plurality of spacers, so that the distance between the bottom plate 81 and the retention unit 4 can be adjusted and they can be fixed to each other. Regarding the case of using L angles as the coupling tools, the detailed explanation is given later.

In this way, the bottom plate 81 and the retention unit 4 are adjusted for the distance and are fixed using the stud bolt 87. In between the bottom plate 81 and the retention unit 4, there is a portion in which the power lines 203 and the optical cable 205 become exposed; and, when the energization terminator 8 is submerged in the water, that portion of the power lines 203 which comes in contact with the water can be maintained to have a constant deflection.

Subsequently, the worker attaches the protective object 82 to the bottom plate (Step S28). FIG. 37 is a schematic diagram illustrating the state in which the protective object 82 is attached to the bottom plate 81. Herein, the worker passes a bolt through the flange of the protective object 82 and the through hole 811 of the bottom plate 81, and thus fixes the bottom plate 81 and the protective object 82.

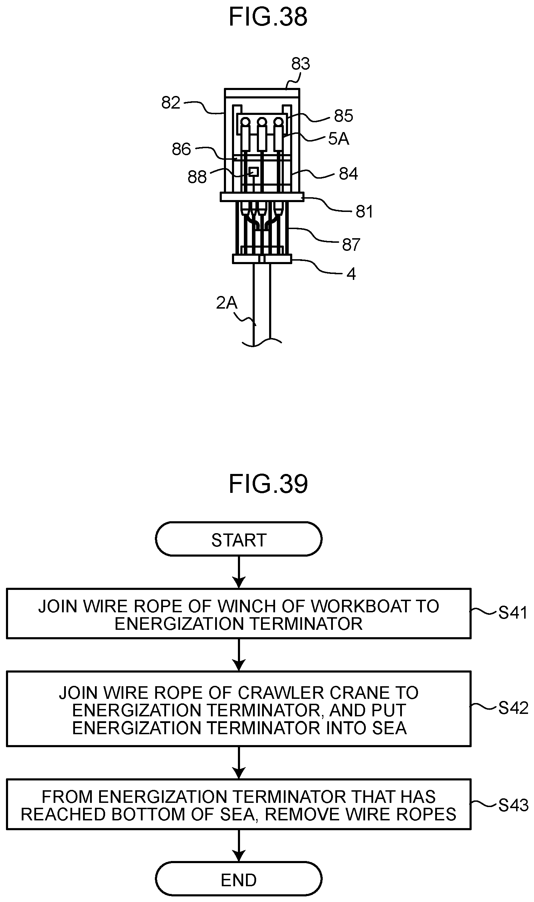

Then, the worker attaches the lid 83 to the protective object 82 and closes the protective object 82 (Step S29). FIG. 38 is a schematic diagram illustrating the state in which the lid 83 is attached to the protective object 82. As a result of attaching the lid 83 to the protective object 82, the inside of the protective object 82 becomes closed so that the sea water does not enter. Moreover, six power lines 203 and two optical cables 205 are collectively housed inside the protective object 82. Meanwhile, on the bottom plate 81, the power lines 203 are passed one by one inside the bottom plate 81. Alternatively, it is possible to form a hole through which either three power lines 203 or six power lines 203 can be passed at once.

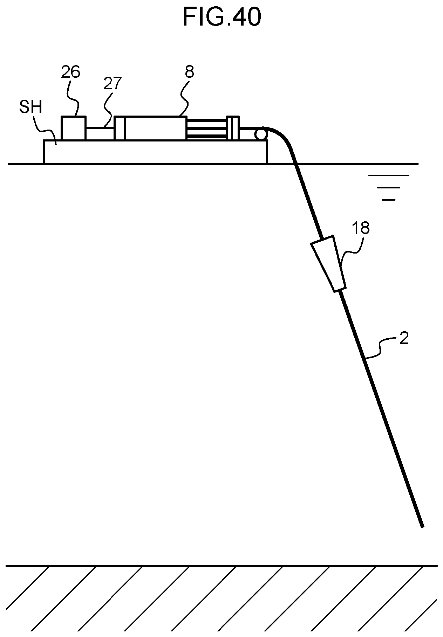

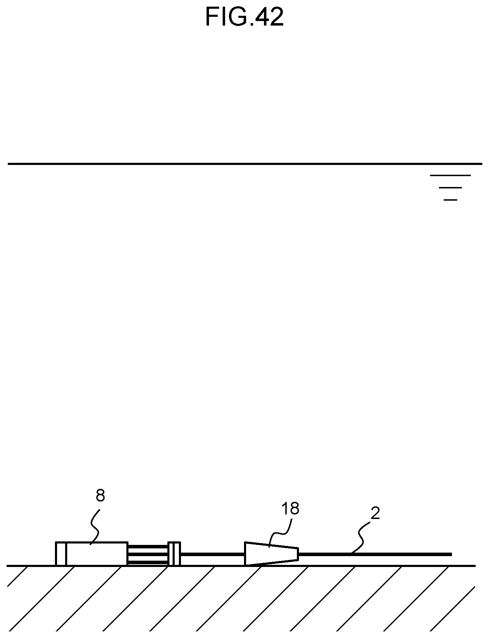

Subsequently, the worker lowers the assembled energization terminator 8 to the bottom of the sea. FIG. 39 is a flowchart for explaining the flow of a step of lowering the energization terminator 8 to the bottom of the sea. FIGS. 40 to 42 are schematic diagrams illustrating a step of lowering the energization terminator 8 to the bottom of the sea.

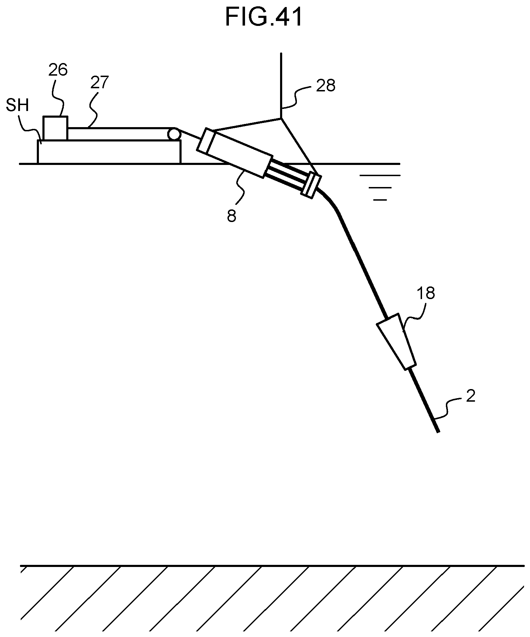

Firstly, the worker SH joins the wire rope 27, which extends from the winch 26, to the eyebolt 83A of the energization terminator 8 (Step S41). FIG. 40 is a schematic diagram illustrating the state in which the wire rope 27 is joined to the energization terminator 8. Moreover, the worker joins the wire rope 28 of the crawler crane to the movement terminator 7, puts the energization terminator 8 into the sea and lowers it using the winch 26 and the crawler crane (Step S42). FIG. 41 is a schematic diagram illustrating the state in which the energization terminator 8 is put into the sea.

Upon being put into the sea, when the energization terminator 8 reaches the bottom of the sea, the diver DV removes the wire ropes 27 and 28 (Step S43). In the energization terminator 8, since the array cables 2A and 2B are connected in series, even when the concerned offshore platform 1 is removed from the wind farm, the electric power generated in the wind farm can still be transmitted to the transformer.

Given below is the explanation of a step of connecting the array cables 2A and 2B to the offshore platform 1 for which the maintenance is completed. At the time of connecting the array cables 2A and 2B to the offshore platform 1 for which the maintenance is completed, the energization terminator 8 is lifted onto the workboat SH and is dismantled, and the movement terminator 7 is assembled on the workboat SH. Then, the assembled movement terminator 7 is lifted into the junction boxes 30A and 30B and is dismantled inside the junction boxes 30A and 30B; the power lines 203 are connected to the section cables 131, and the optical cable 205 is connected to the optical cable junction box 36.

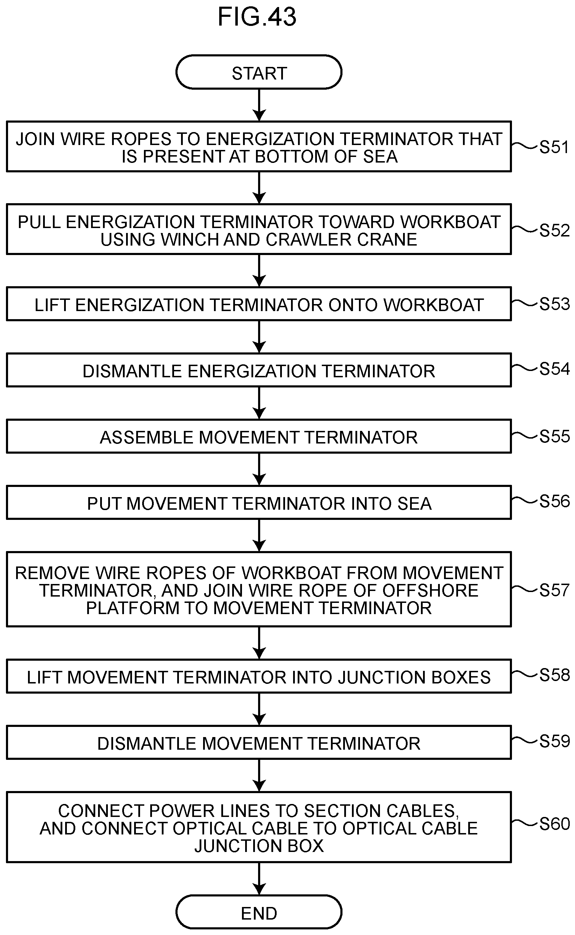

FIG. 43 is a flowchart for explaining the flow of a step of connecting the array cables 2A and 2B to the offshore platform 1 for which the maintenance is completed. Firstly, the diver DV joins the wire ropes 27 and 28 to the energization terminator 8 present at the bottom of the sea (Step S51). Then, the worker pulls the energization terminator 8 toward the workboat SH using the winch 26 and the crawler crane (Step S52). Subsequently, the worker lifts the energization terminator 8, which has been pulled toward the workboat SH, onto the workboat SH (Step S53).

Then, the worker dismantles the energization terminator 8 on the workboat (Step S54). Subsequently, the worker assembles the movement terminator 7 in an identical manner to the process explained earlier (Step S55). The worker joins the movement terminator 7 to the wire ropes 27 and 28, and puts the movement terminator 7 into the sea using the winch 26 and the crawler crane (Step S56).

Then, the diver DV joins the wire rope 22 of the offshore platform 1, for which the maintenance is completed, to the movement terminator 7, and removes the wire ropes 27 and 28 (Step S57).

Subsequently, the worker lifts the movement terminator 7 inside the junction boxes 30A and 30B using the winch 20 (Step S58). The worker dismantles the movement terminator 7 inside the junction boxes 30A and 30B (Step S59). Then, the worker assembles the device direct-connection terminals 5A and 5B at the end portions of the power lines 203 and connects the power lines 203 to the section cables 131, as well as connects the optical cable 205 to the optical cable junction box 36 (Step S60).

As explained above, according to the present embodiment, the retention unit 4 is treated to be a part of the movement terminator 7 and is treated to be a part of the energization terminator 8. Hence, the assembly of the movement terminator 7 and the assembly of the energization terminator 8 can be performed with ease. Thus, the retention unit 4, which supports the array cables 2 in the junction boxes 30, can be used in common in the movement terminator 7 and the energization terminator 8. As a result, it becomes possible to hold down the cost. Moreover, the length of the power lines 203 and the optical cable 205, which become exposed ahead of the retention unit 4, does not change. Hence, the movement terminator 7 and the energization terminator 8 can be assembled without having to vary the distance from the retention unit 4 to the leading ends of the power lines 203 and without having to vary the distance from the retention unit 4 to the optical cable 205. Moreover, in the energization terminator 8, since the array cables 2A are connected in parallel to the array cables 2B, it becomes possible to hold down the total length of the energization terminator 8.

Furthermore, in the energization terminator 8, three pairs of device direct-connection terminals 5A and 5B are housed in the protective object 82. Hence, as compared to the structure in which each pair of device direct-connection terminals 5A and 5B is housed in a separate waterproof container, it becomes possible to hold down the volume of the protective object 82 and to enhance the water pressure resistance. Moreover, since three pairs of device direct-connection terminals 5A and 5B are collectively housed in the protective object 82, it becomes easier to secure the work space for connecting the device direct-connection terminals 5A and 5B and to reliably ensure waterproofing upon confirming the connection among the connectors. Hence, the electrical connection can also be confirmed. Furthermore, since the energization terminator 8 is lowered to the bottom of the sea, it becomes possible to hold down the damage attributed to the waves and the oceanic current, to hold down an increase in the weight attributed to the marine growth, and to hold down the occurrences of making contact with the marine species.

### [Modification example]

Meanwhile, although the invention has been described with respect to a specific embodiment for a complete and clear disclosure, the appended claims are not to be thus limited. For example, the present invention can be implemented by modifying the embodiment in the manner explained below. Moreover, a configuration obtained by appropriately combining the constituent elements explained above is also included in the present invention. Furthermore, the appended claims are to be construed as embodying all modifications and alternative constructions that may occur to one skilled in the art that fairly fall within the basic teaching herein set forth.

In the present invention, the end portions of three power lines 203 are independently housed in the waterproof pipes 61. Alternatively, the three power lines 203 can be housed in a single waterproof pipe 61. Moreover, in the embodiment described above, the device direct-connection terminal 5A is dismantled, and the stress cones 57 and the terminals 53 are housed in the waterproof pipes 61. However, the device direct-connection terminal 5A itself can be housed in the waterproof pipe 61 without dismantling it.

In the present invention, the bed stiffener 18 can be attached to the movement terminator 7. When the bed stiffener 18 can be attached to the movement terminator 7, during the movement of the movement terminator 7, it becomes possible to hold down the bending of the array cable 2 in the vicinity of the movement terminator 7.

When the offshore platform 1 is in operation, the power lines 203 transmit electric power. Hence, in the energization terminator 8, it is desirable that the components are made of a nonmagnetic material for the purpose of holding down the heat generation attributed to the induction. The components of the energization terminator 8 can be copper, aluminum, or titanium.

In the embodiment described above, in the energization terminator 8, the array cables 2A and the array cables 2B are connected in parallel. Alternatively, in the present invention, the structure can be such that the array cables 2A and the array cables 2B are connected in series.

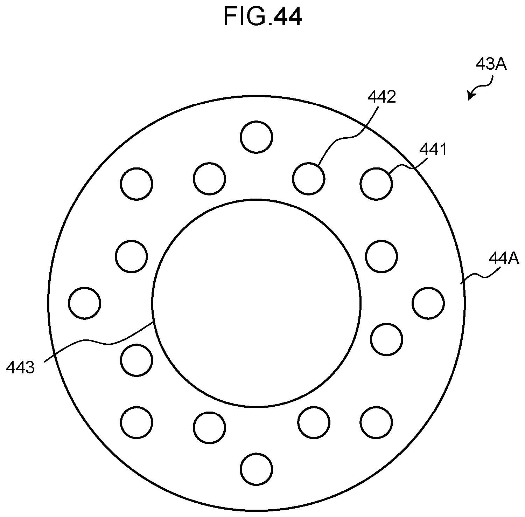

FIG. 44 is a planar view of a clamping member 43A representing a modification example of the clamping member 43 of the movement terminator 7. The clamping member 43A has a through hole 443 formed thereon for enabling passage of the array cable 2, and has a plurality of bolt holes 441 and a plurality of bolt holes 442 formed thereon. The bolt holes 441 are holes used for passing the bolts meant for fastening the adapter 35 and the clamping member 43A. The bolt holes 442 are holes used for passing the bolts meant for fastening the flange 74 and the clamping member 43A. The distance from the center of the clamping member 43A to the center of the bolt holes 442 is shorter than the distance from the center of the clamping member 43A to the center of the bolt holes 441. At the time of assembling the movement terminator 7, if the retention unit 4 includes the clamping member 43A, the flange 74 and the clamping member 43A are fastened using the bolts passed through the bolt holes 442, and the bolts that were used in fastening the adapter 35 and the clamping member 43A are removed. In this structure, in the state in which the retention unit 4 is supported by the adapter 35, the flange 74 can be attached to the retention unit 4 without having to suspend the retention unit 4. Meanwhile, the clamping member 43A can also have a half-split structure.

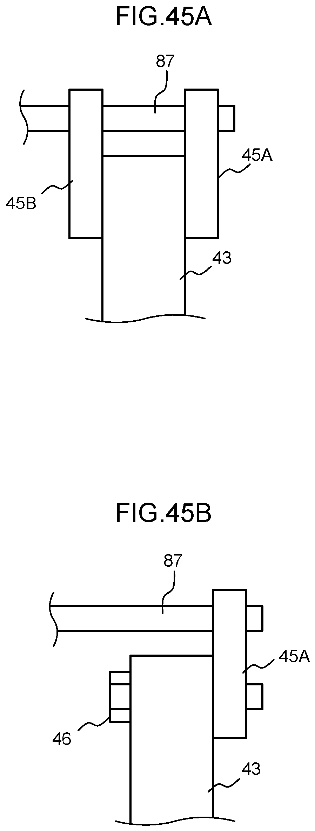

According to the embodiment described above, the stud bolt 87 is attached to the retention unit 4. However, the method for attaching the stud bolt 87 to the retention unit 4 is not limited to the method according to the embodiment. FIGS. 45A and 45B are diagrams illustrating exemplary modification examples of attaching the stud bolt 87 to the retention unit 4. As illustrated in FIG. 45A, the end portions of the clamping member 43 can be sandwiched between plate-like members 45A and 45B and, as a result of attaching the stud bolt 87 to the plate-like members 45A and 45B, the stud bolt 87 can be attached to the retention unit 4. As illustrated in FIG. 45B, the plate-like member 45A can be fixed to the end portion of the clamping member 43, and the stud bolt 87 can be attached to the plate-like member 45A. As a result, the stud bolt 87 can be attached to the retention unit 4.

In the embodiment described above, the retention unit 4 is not dismantled and is treated to be a part of the movement terminator 7 and the energization terminator 8. However, at the time of assembling the energization terminator 8, if the distance from the bottom plate 81 to the retention unit 4 does not match, the retention unit 4 can be reassembled in the junction box 30A, the junction box 30B, or the workboat SH.

In the embodiment described above, the wedge 41 is fixed to the iron wire sheath 223. Alternatively, the wedge 41 can be fixed to the external sheath 225.

In the present invention, the waterproofed portions 62 are not limited to have the structure according to the embodiment, and alternatively can have some other structure. For example, the waterproofed portions 62 can include an aluminum water-shielding shrinkable tube more on the inside than the heat-shrinkable tube 622. Alternatively, the waterproofed portions 62 can include an epoxy glass tape more on the inside than the heat-shrinkable tube 622.

In the energization terminator 8, the power lines 203 of the array cables 2A and the power lines 203 of the array cables 2B are connected using the device direct-connection terminals 5A and 5B. However, the connection can be established using some other connectors other than device direct-connection terminals.

With reference to FIG. 13, the waterproof pipe 61 is separately provided for each power line 203, and the end portion of each power line 203 is independently inserted into the corresponding waterproof pipe 61. Alternatively, as illustrated in the example in FIG. 17C, the end portions of a plurality of power lines 203 can be collectively inserted into a single hollow waterproof container that is made of a metal and that has one end in the longitudinal direction closed and has the other end open; and waterproofing can be achieved by performing waterproof treatment at the open end portion of the waterproof container. The waterproof container represents an example of a waterproof member according to the present invention. Moreover, when the end portions of a plurality of power lines 203 are collectively inserted into a single waterproof container, the open side into which the power lines 203 are inserted can be configured to include the structure of the lower clasp 89, and waterproof treatment can be performed in the portion of the lower clasp 89. Furthermore, in this modification example, the waterproof container can be fixed to the retention unit 4 using a stud bolt. In this way, the waterproof member can be equipped with the function of the protective member, and a conductor end portion can be made waterproof and can be housed in the protective member.

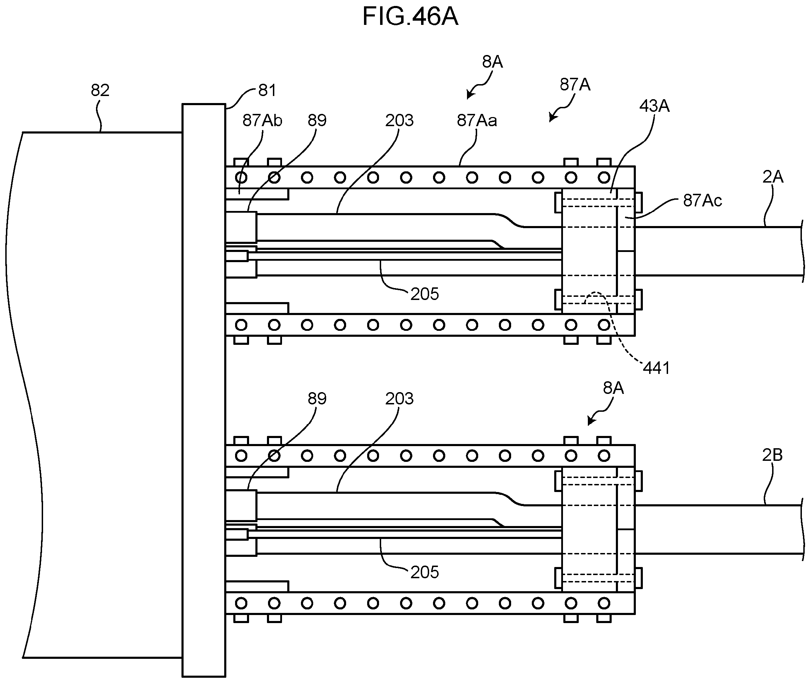

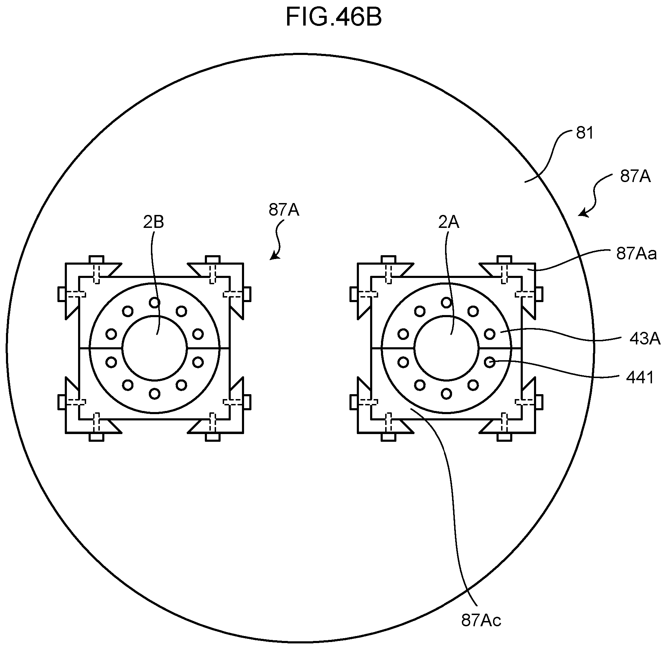

FIGS. 46A and 46B are diagrams illustrating an example in which, as explained earlier, the coupling tool of the energization terminator includes L angles having a plurality of bolt holes formed thereon. FIG. 46A is a side view, and FIG. 46B is a bottom view. In the example illustrated in FIGS. 46A and 46A, the clamping member 43A illustrated in FIG. 44 is used as the clamping member. Moreover, in place of the stud bolt 87 representing the coupling tool in the energization terminator 8 illustrated in FIG. 30, a coupling tool 87A is used in an energization terminator 8A illustrated in FIGS. 46A and 46B. The coupling tool 87A includes L angles 87Aa, attachment brackets 87Ab, and an attachment jig 87Ac. The attachment brackets 87Ab are the brackets for attaching the L angles 87Aa to the bottom plate 81, and are fixed to the L angles 87Aa and the bottom plate 81 using blots. The attachment jig 87Ac is a jig for connecting the L angles 87Aa to the clamping member 43, and is fixed to the L angles 87Aa and the bottom plate 81 using the bolt holes 441 of the clamping member 43A.

### Reference Signs List

- 1: offshore platform
- 2: array cable
- 4: retention unit
- 5A, 5B: device direct-connection terminal
- 7: movement terminator
- 8: energization terminator
- 30A, 30B: junction box
- 203: power line
- 205: optical cable
- WF: wind farm

## Claims

1. A cable connection method comprising:
a step of removing, from an offshore wind power facility, electrical conductors of a first cable and a second cable that are serially connected to the offshore wind power facility and that transmit electric power;
a step of assembling including
providing a first protective member including a waterproof member configured to make a conductor end portion of the removed first cable waterproof, the first protective member being configured to protect the conductor end portion of the removed first cable,
assembling a mobile object by fixing the first protective member to a retention unit configured to retain the first cable in the offshore wind power facility, and
providing a second protective member including a waterproof member configured to make a conductor end portion of the removed second cable waterproof, the second protective member being configured to protect the conductor end portion of the removed second cable, and
assembling a mobile object by fixing the second protective member to a retention unit configured to retain the second cable in the offshore wind power facility;
a step of suspending the mobile objects from the offshore wind power facility using wire ropes and holding the mobile objects in the sea;
a step of lifting the mobile objects held in the sea onto a workboat;
a step of dismantling the mobile objects lifted onto the workboat;
a step of connecting the conductor end portion of the first cable and the conductor end portion of the second cable that have been housed in the mobile objects;
a step of assembling a connecting object including a closed protective object configured to house the connected conductor end portions;
a step of fixing, using coupling tools, the protective object and the retention unit of the first cable and fixing, using the coupling tools, the protective object and the retention unit of the second cable; and
a step of lowering the connecting object to bottom of sea.

2. The cable connection method according to claim 1, wherein
each of the first cable and the second cable includes an optical cable,
in the mobile objects, end portions of the optical cables are made waterproof and are housed in the first protective member and the second protective member, and
in the connecting object, the optical cable of the first cable and the optical cable of the second cable are connected and are housed in the protective object.

3. The cable connection method according to claim 1, wherein each of the first cable and the second cable has a plurality of core wires.

4. The cable connection method according to claim 3, wherein, in the step of making the conductor end portions waterproof, the conductor end portion corresponding to each of the core wires is made waterproof.

5. The cable connection method according to claim 1, wherein
the offshore wind power facility includes
a riser tube having a hollow portion through which the first cable is passed from the sea, and
a riser tube having a hollow portion through which the second cable is passed from the sea, and
the mobile objects are able to pass through the riser tubes.

6. The cable connection method according to claim 1, wherein, in the step of lifting the mobile objects onto the workboat, the mobile objects suspended using the wire ropes of the offshore wind power facilities and held in sea are newly joined to the wire ropes of the workboat and are lifted onto the workboat using the wire ropes of the workboat.

7. The cable connection method according to claim 1, wherein, in sea, sea water flows into the first protective member and into the second protective member.

8. The cable connection method according to claim 1, wherein distance between the protective member and the retention unit of the first cable and distance between the protective member and the retention unit of the second cable are adjusted using the coupling tools.

9. The cable connection method according to claim 1, wherein
the coupling tools are stud bolts, and
distance between the protective member and the retention unit of the first cable and distance between the protective member and the retention unit of the second cable are independently adjusted using the stud bolts.

10. The cable connection method according to claim 1, wherein the conductor end portions housed in the protective object are fixed inside the protective object, and components used for fixing the conductor end portions are nonmagnetic members.

11. The cable connection method according to claim 3, wherein the conductor end portions of the first cable and the second cable are housed inside the protective object through holes formed on the protective object, and waterproof treatment is performed on the holes through which the first cable and the second cable are passed.

12. A mobile object comprising:
a waterproof member configured to make a conductor end portion of a cable waterproof, the cable being serially connected to an offshore wind power facility and configured to transmit electric power;
a protective member configured to protect the conductor end portion and fixed to a retention unit configured to retain the conductor end portion in the offshore wind power facility; and
a suspension tool to which a rope for suspending the protective member is knotted.

13. The mobile object according to claim 12, wherein the protective member is configured to allow sea water flow therein when in sea.

14. A connecting object comprising:
a connecting unit configured to connect conductor end portions of a first cable and a second cable which are serially connected to an offshore wind power facility and which transmit electric power;
a sealed protective object configured to house the connecting unit; and
a coupling tool configured to
fix the protective object and a retention unit configured to retain the first cable in the offshore wind power facility, and
fix the protective object and a retention unit configured to retain the second cable in the offshore wind power facility.

15. The connecting object according to claim 14, wherein the coupling tool is configured to
adjust distance between the protective member and the retention unit of the first cable, and
adjust distance between the protective member and the retention unit of the second cable.

16. The connecting object according to claim 14, wherein the two retention units are integrated as a single unit that is fixed to the protective object.

17. The connecting object according to claim 14, wherein the two retention units are separately and independently fixed to the protective object.

18. The connecting object according to claim 14, wherein the protective object includes a position adjustment/fixing unit configured to, inside the closed protective object, adjust positions of the first cable and the second cable and performs fixing.
